(19) Europäisches Patentamt
European Patent Office
Office européen des brevets

(11) **EP 1 532 432 B1**

(12) **FASCICULE DE BREVET EUROPEEN**

(45) Date de publication et mention de la délivrance du brevet:
**14.09.2011 Bulletin 2011/37**

(21) Numéro de dépôt: **03760755.3**

(22) Date de dépôt: **19.06.2003**

(51) Int Cl.:
*G01N 21/21* (2006.01)    *G01J 4/00* (2006.01)
*G01B 11/00* (2006.01)

(86) Numéro de dépôt international:
**PCT/FR2003/001895**

(87) Numéro de publication internationale:
**WO 2004/001399 (31.12.2003 Gazette 2004/01)**

(54) **SUPPORTS ANTI-REFLECHISSANTS POUR LA LUMIERE POLARISEE EN REFLEXION**

BLENDSCHUTZTRÄGER FÜR REFLEKTIERTES POLARISIERTES LICHT

ANTIGLARE SUPPORTS FOR REFLECTED POLARIZED LIGHT

(84) Etats contractants désignés:
**AT BE BG CH CY CZ DE DK EE ES FI FR GB GR HU IE IT LI LU MC NL PT RO SE SI SK TR**

(30) Priorité: **19.06.2002 FR 0207599**

(43) Date de publication de la demande:
**25.05.2005 Bulletin 2005/21**

(73) Titulaires:
- **CENTRE NATIONAL DE LA RECHERCHE SCIENTIFIQUE (CNRS) 75794 Paris Cedex 16 (FR)**
- **UNIVERSITE PIERRE ET MARIE CURIE 75005 Paris (FR)**

(72) Inventeurs:
- **AUSSERRE, Dominique F-72370 Soulitre (FR)**
- **VALIGNAT, Marie-Pierre Princeton , NJ 08540 (US)**

(74) Mandataire: **Jacquard, Philippe Jean-Luc et al Cabinet ORES 36, rue de St Pétersbourg 75008 Paris (FR)**

(56) Documents cités:
DE-A- 19 708 036     GB-A- 2 291 890
GB-A- 2 352 030      US-A- 5 333 052
US-A- 5 408 322

- DICKE J ET AL: "Ellipsomicroscopy for surface imaging: contrast mechanism, enhancement, and application to CO oxidation on Pt(110)" JOURNAL OF THE OPTICAL SOCIETY OF AMERICA - A, OPTICAL SOCIETY OF AMERICA, WASHINGTON, US, vol. 17, no. 1, janvier 2000 (2000-01), pages 135-141, XP002182387 ISSN: 1084-7529
- SHATALIN S V ET AL: "Polarisation contrast imaging of thin films in scanning microscopy" OPTICS COMMUNICATIONS, NORTH-HOLLAND PUBLISHING CO. AMSTERDAM, NL, vol. 116, no. 4, 1 mai 1995 (1995-05-01), pages 291-299, XP004011523 ISSN: 0030-4018

**Description**

La présente invention concerne des pour l'observation d'échantillon en lumière polarisée caractérisés par l'utilisation de supports porte-objet particuliers, destinés à améliorer les mesures ou l'observation en réflexion de films minces ou d'objets très petits sous microscope optique ou sous tout autre instrument d'imagerie optique: viseur, lunette, macroscope, loupe, loupe binoculaire, caméra, appareil photo, microscope à champ proche, endoscope, microscope confocal, microscope à champ proche optique (SNOM), lecteur de biopuces, lecteur magnéto-optique, microscope confocal. Ces supports sont en particulier destinés à être utilisés dans les techniques de visualisation et de mesure en contraste interférentiel différentiel (DIC) par réflexion. Ils sont également destinés à être utilisés dans toutes les techniques d'observation et de mesure par réflexion en lumière polarisée.

Ces supports sont définis soit par un ensemble de caractéristiques qui peuvent concerner leur nature (exemple: une couche diélectrique sur un substrat de silicium) ou leur fonction (exemple: support amplificateur de contraste pour les observations entre polariseurs croisés), et qui si elles sont communes à un certain nombre de ces supports les classent dans des familles de supports, soit par un ensemble de paramètres ajustables qui permettent de reconnaître individuellement les membres d'une famille donnée.

US-A-5 333 052 décrit un système d'inspection à contraste élevé d'un échantillon. Le dispositif comporte deux polariseurs croisés et un compensateur de phase. Deux de ces trois composants optiques sont ajustés afin d'obtenir un minimum d'intensité pour la lumière réfléchie.

L'objectif de la présente invention est donc de proposer un dispositif comprenant support, présentant en fonction de l'épaisseur $e_1$ et de l'indice $n_1$ de la couche formée sur un substrat d'indice de réfraction complexe $n_2$, dans un milieu ambiant d'indice $n_0$, une fonction anti-réfléchissante pour une observation en lumière polarisée.

A cet effet, l'invention concerne un dispositif selon l'une des revendications 1 ou 3.

Plus précisément, un premier mode de réalisation de l'invention porte sur un dispositif d'observation d'un échantillon comprenant un microscope optique, un support destiné à recevoir ledit échantillon immergé dans un milieu d'indice $n_0$, des moyens pour éclairer l'échantillon avec un éclairage incohérent convergent incident sous un angle $\theta_0$ à une longueur d'onde $\lambda$ et deux polariseurs croisés ; ledit support comportant un substrat d'indice de réfraction complexe $n_2$ et une couche d'indice de réfraction complexe $n_1$ et d'épaisseur $e_1$ ; caractérisé en ce que l'épaisseur $e_1$ de la couche est choisie, par rapport aux paramètres $\theta_0$, $\lambda$, $n_2$ et $n_1$ et à 2% près, de manière à minimiser un coefficient choisi parmi

$|\sigma^2|$ et $\dfrac{\left|\sigma^2\right|}{R_{NP}}$, avec :

$$\sigma = r_p + r_s = \frac{\sigma_{01} + \sigma_{12}\left(1 + \pi_{01}\right)e^{(-2j\beta_1)} + \sigma_{01}\pi_{12}e^{(-4j\beta_1)}}{\left(1 + r_{01(p)}r_{12(p)}e^{(-2j\beta_1)}\right)\left(1 + r_{01(s)}r_{12(s)}e^{(-2j\beta_1)}\right)}$$

et

$$R_{NP} = \frac{1}{4}\left|r_p + r_s\right|^2 + \frac{1}{4}\left|r_p - r_s\right|^2 \quad ;$$

formules dans lesquelles

$$r_p = \frac{r_{01(p)} + r_{12(p)}e^{(-2j\beta_1)}}{1 + r_{01(p)}r_{12(p)}e^{(-2j\beta_1)}} \qquad r_s = \frac{r_{01(s)} + r_{12(s)}e^{(-2j\beta_1)}}{1 + r_{01(s)}r_{12(s)}e^{(-2j\beta_1)}} \quad ;$$

$$r_{ij(p)} = \frac{n_j \cos\theta_i - n_i \cos\theta_j}{n_j \cos\theta_i + n_i \cos\theta_j} \qquad r_{ij(s)} = \frac{n_i \cos\theta_i - n_j \cos\theta_j}{n_i \cos\theta_i + n_j \cos\theta_j} \quad ;$$

$$\beta_1 = \frac{2\pi n_1 e_1 \cos\theta_1}{\lambda}$$

$$\cos\theta_1 = \sqrt{1 - \left(\frac{n_0}{n_1}\right)^2 \sin^2\theta_0}$$

Les coefficients $r_{ij(p)}$ et $r_{ij(s)}$ sont les coefficients de Fresnel des différentes interfaces [(i, j) = (0,1) ou (1, 2)] pour la lumière incidente en polarisation p et s respectivement.

Un second mode de réalisation de l'invention porte sur un dispositif d'observation d'un échantillon comprenant un microscope optique, un support destiné à recevoir ledit échantillon immergé dans un milieu d'indice $n_0$, des moyens pour éclairer l'échantillon avec un éclairage incohérent convergent incident sous un angle $\theta_0$ à une longueur d'onde $\lambda$, un polariseur et une lame quart d'onde; ledit support comportant un substrat d'indice de réfraction complexe $n_2$ et une couche d'indice de réfraction complexe $n_1$ et d'épaisseur $e_1$ ; caractérisé en ce que l'épaisseur $e_1$ de la couche est choisie, par rapport aux paramètres $\theta_0$, $\lambda$, $n_2$ et $n_1$ et à 2% près, de manière à minimiser un coefficient choisi parmi $|\sigma^2|$

et $\dfrac{|\sigma^2|}{R_{NP}}$ .

Les coefficients $|\sigma^2|$ et $\dfrac{|\sigma^2|}{R_{NP}}$ définis de la même manière que pour le premier mode de réalisation de l'invention.

Des variantes et perfectionnements de l'invention font l'objet des revendications dépendantes 2 et 4 à 17.

Dans différents modes de réalisation possibles, l'invention sera décrite plus en détail en référence aux dessins annexés dans lesquels :

- la figure 1 est une représentation schématique de la transmission et de la réflexion obliques d'une onde plane à l'interface plane entre deux milieux semi-infinis 0 et 1 ;
- la figure 2 est une représentation schématique d'un support, selon l'invention.

Pour décrire complètement l'invention, le support qu'elle concerne est présenté, ci-après, dans son contexte en reprenant à la fois les définitions des éléments impliqués et des dispositifs proches par rapport auxquels il est utile de le situer.

## I. Conventions:

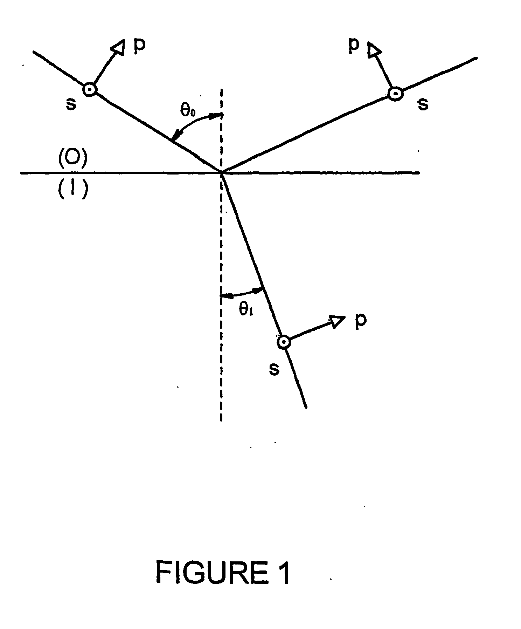

Les conventions de signe adoptées sont celles représentées à la figure 1 et décrites également dans le livre de Azzam et Bashara intitulé "ellipsometry and polarised light", North-Holland, p 271.
Cette figure représente la transmission et la réflexion obliques d'une onde plane à l'interface plan entre deux milieux semi-infinis 0 et 1. $\theta_0$ et $\theta_1$ sont respectivement les angles d'incidence et de réfraction. p et s sont respectivement les polarisations parallèle et perpendiculaire au plan d'incidence. Le vecteur produit $\hat{p} \times \hat{s}$ des vecteurs unités le long de ces axes est parallèle à la direction de propagation et orienté dans le sens de la propagation.

## II.Définitions:

- Par "support", on entend l'association d'un substrat 1 solide d'indice complexe de réfraction $n_2$ et d'un revêtement comportant au moins une couche 2 d'épaisseur $e_1$ et d'indice de réfraction complexe $n_1$. Ce support est placé dans un milieu ambiant 3 d'indice $n_0$.
- Par "échantillon", on entend l'association du support porte-objet et de l'objet qu'il porte, ledit support étant l'objet de l'invention.
- Par "observation", on entend une observation oculaire directe à travers un instrument ou l'acquisition d'une image ou d'un signal par des moyens de détection comprenant un dispositif d'enregistrement tel qu'appareil photo analogique ou numérique, caméra CCD, ou un dispositif de mesure tel qu'un détecteur (cellule photovoltaïque, photomultiplicateur) ou une matrice de détecteurs (barrette de photodiodes, CCD, ....) placés dans un plan où se forme l'image de l'échantillon.

- Un support parfaitement réfléchissant est défini par les relations

$$|r_p| = |r_s| = 1 \qquad\qquad (E1)$$

sur ses coefficients de Fresnel $r_p$ et $r_s$.

- "L'intensité normalisée" de l'image d'un support ou d'un échantillon obtenue au moyen d'un dispositif d'imagerie fonctionnant en réflexion et incluant éventuellement un ou plusieurs éléments polarisants et/ou modifiant la polarisation de la lumière et recueillie par des moyens de détection ou d'observation est définie par le rapport $R = \dfrac{I}{I_0}$ où $I = I(x, y)$ désigne l'intensité recueillie en un point $(x, y)$ de l'image et où $I_o = I_0(x, y)$ désigne l'intensité recueillie en un point $(x, y)$ de l'image par les mêmes moyens de détection ou d'observation réglés de la même façon en l'absence de tout polariseur et en utilisant un support parfaitement réfléchissant.

- Un support "anti-réfléchissant" (AR) est défini comme ayant un coefficient de réflexion minimal sur l'ensemble de ses paramètres ajustables. Il est relatif aux conditions de l'observation ou de la mesure. Un support anti-réfléchissant idéal est tel que son coefficient de réflexion soit nul.

- Un support "amplificateur de contraste" est défini tel que l'objet qu'il porte soit observé avec un contraste rendu maximal ou qu'une grandeur physique de l'objet soit mesurée avec une sensibilité rendue maximale sur l'ensemble de ses paramètres ajustables. Il est également relatif aux conditions de l'observation ou de la mesure. Il est de plus relatif à la nature de l'objet observé. Lorsque la nature de l'objet n'est pas précisée, l'objet sera défini par défaut comme un film mince d'épaisseur 1 *Angström* (Å) et d'indice n identique à celui de la surface du support, c'est à dire du matériau constituant la couche 2 en contact avec l'objet.

**III. Conditions d'éclairage:**

"L'éclairage axial convergent" est convergent et à symétrie radiale autour de la normale à la surface, défini comme "l'axe" dans la suite de la description, avec un angle d'ouverture $\theta_{max}$. Les angles d'incidence participant au cône d'éclairage sont donc tous les angles compris entre 0 et $\theta_{max}$.

« L'éclairage annulaire » possède aussi une symétrie radiale autour de la normale à la surface, i.e. l'axe, mais il est défini par un angle d'incidence $\theta$ unique à mieux que 5 degrés près. L'éclairage "anisotrope" est défini par le fait que a symétrie radiale des azimuts $\varphi$ est brisée mais la symétrie par rapport à l'axe conservée, et enfin "l'éclairage oblique" est défini par un seul angle d'incidence $\theta$ et un seul azimut $\varphi$.

Excepté lorsque spécifié, l'éclairage sera considéré comme annulaire dans le reste de la description. Cependant, les supports décrits pour un usage sous éclairage annulaire avec un angle d'incidence $\theta_0$ sont également destinés à être utilisés avec un éclairage axial convergent avec un angle d'incidence moyen $\theta_0$.

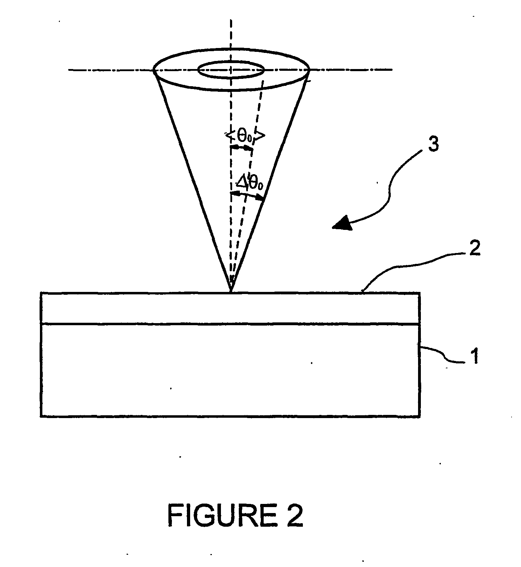

Lorsque l'éclairage est axial convergent, on appelle "angle moyen" $\theta_0$ l'angle défini par le cercle séparant le cône d'éclairage en deux angles solides de même valeur. Le support est donc destiné à être utilisé sous un éclairage convergent d'ouverture angulaire $\Delta\theta_0$ et centré sur $\theta_0$, où $\theta_0$ est l'angle d'incidence moyen compris entre 0 et $\Delta\theta_0$ défini par la relation $\cos\theta_0 = \cos^2\left(\dfrac{\Delta\theta_0}{2}\right)$ (Figure 2).

Par défaut, la collection de la lumière par les moyens de détection ou d'observation est supposée à symétrie radiale autour de la normale à la surface, avec le même angle unique de collection ou le même angle d'ouverture que l'éclairage, dans le reste de la description.

L'éclairage est spatialement incohérent, ce qui signifie qu'un rayon lumineux contribuant à l'éclairage ne peut interférer qu'avec lui-même. Dans ces conditions, les contributions à la formation de l'image doivent être ajoutées en amplitude le long d'un faisceau et en intensité sur l'ensemble des faisceaux, c'est à dire sur l'ensemble des angles d'incidence $\theta$ et des azimuts $\varphi$ contribuant à l'éclairage. Les coefficients de Fresnel $r_p$ et $r_s$ sont des fonctions complexes de $\theta$. Dans le cas de supports anisotropes, ce sont de plus des fonctions de $\varphi$. Mais le support est supposé isotrope dans le reste de la description excepté lorsque spécifié.

De même, l'éclairage est supposé monochromatique ou quasi-monochromatique, le faisceau lumineux étant centré sur une longueur d'onde $\lambda$. Cependant, les supports décrits pour un usage sous éclairage quasi-monochromatique à la longueur d'onde λ sont également destinés à être utilisés avec un éclairage en lumière blanche ou poly-chromatique, le spectre de l'éclairage étant alors centré sur λ.

**IV. Conditions de polarisation**

**IV.1) Lumière non polarisée:**

L'intensité normalisée $R$

$$R_{NP} = \frac{1}{2}\left(|r_p|^2 + |r_s|^2\right) = \int \rightarrow \frac{1}{4}|r_p + r_s|^2 + \frac{1}{4}|r_p - r_s|^2 \qquad (E2)$$

Elle vaut 1 pour un support parfaitement réfléchissant.
Le coefficient de réflexion du support est défini par cette intensité normalisée en lumière non polarisée. Il dépend des conditions d'éclairage.

**IV.2) Lumière polarisée:**

L'échantillon est placé entre un premier et un deuxième polariseurs. Dans un mode de réalisation préférentielle et pour le reste de la description lesdits polariseurs seront considérés comme linéaires. Lorsque ledit échantillon est éclairé par un faisceau lumineux, le faisceau traverse sur son trajet optique le premier polariseur qui définit sa polarisation, puis après interaction avec l'échantillon, le faisceau lumineux traverse le deuxième polariseur. Le premier polariseur est appelé "polariseur d'éclairage". Le deuxième polariseur est le polariseur d'analyse ou "analyseur". Le premier et le deuxième polariseurs forment entre eux un angle $\phi$ modulo $\pi$.

L'intensité normalisée $R(\phi)$ s'écrit :

$$4\,R(\phi) = \cos^2\phi\,(|r_p|^2 + |r_s|^2) - \frac{\cos 2\phi}{4}|r_p + r_s|^2 \qquad (E3)$$

ou, de façon équivalente :

$$4\,R(\phi) = \frac{1}{2}(|r_p|^2 + |r_s|^2) + \frac{\cos 2\phi}{4}|r_p - r_s|^2 = R_{NP} + \frac{\cos 2\phi}{4}|r_p - r_s|^2 \qquad (E4)$$

Dans le cas particulier où le premier et deuxième polariseurs sont parallèles, elle s'écrit :

$$4\,R(0) = (|r_p|^2 + |r_s|^2) - \frac{1}{4}|r_p + r_s|^2 = 2R_{NP} - \frac{1}{4}|r_p + r_s|^2 \qquad (E5)$$

ou, de façon équivalente :

$$4\,R(0) = \frac{1}{2}(|r_p|^2 + |r_s|^2) + \frac{1}{4}|r_p - r_s|^2 = R_{NP} + \frac{1}{4}|r_p - r_s|^2 \qquad (E6)$$

Dans le cas particulier où les premier et deuxième polariseurs sont perpendiculaires, c'est à dire croisés, elle s'écrit :

$$4\,R(\tfrac{\pi}{2}) = \tfrac{1}{4}\,\big|r_p + r_s\big|^2 \quad (E7)$$

ou, de façon équivalente:

$$4\,R(\tfrac{\pi}{2}) = \tfrac{1}{2}\,(\big|r_p\big|^2 + \big|r_s\big|^2) - \tfrac{1}{4}\big|r_p - r_s\big|^2 = R_{NP} - \tfrac{1}{4}\big|r_p - r_s\big|^2 \quad (E8)$$

Dans le cas particulier où les deux polariseurs font entre eux un angle $\tfrac{\pi}{4}$, elle s'écrit:

$$4\,R(\tfrac{\pi}{4}) = \tfrac{1}{2}\,(\big|r_p\big|^2 + \big|r_s\big|^2) = R_{NP} \quad (E9)$$

Ainsi, l'intensité normalisée peut être modulée autour de sa valeur moyenne $R_{NP}/4$ avec une amplitude $\tfrac{1}{16}\big|r_p - r_s\big|^2$ par rotation relative de l'analyseur et du polariseur d'éclairage.

Si on pose $R^+ \equiv \tfrac{1}{4}\big|r_p + r_s\big|^2$ et $R^- \equiv \tfrac{1}{4}\big|r_p - r_s\big|^2$.

Alors:

$$4R(\phi) = 2R_{NP}\cos 2\phi - R^+\cos 2\phi = R_{NP} + R^-\cos 2\phi = R^+ + 2R^-\cos 2\phi \quad (E3\text{-}E4\ bis)$$

$$4R(0) = 2R_{NP} - R^+ = R_{NP} + R^- \quad (E5\text{-}E6\ bis)$$

$$4\,R(\tfrac{\pi}{2}) = R^+ = R_{NP} - R^- \quad (E7\text{-}E8\ bis)$$

Le support de l'invention est destiné à être utilisé entre un premier et un deuxième polariseurs croisés. Le faisceau lumineux incident sur le support est donc polarisé.

**V. Supports et revêtements anti-réfléchissants**

**V.1) lumière non polarisée.**

Il est connu qu'en lumière non polarisée, un support anti-réfléchissant (AR) placé dans un milieu ambiant d'indice $n_0$ présente un coefficient $R_{NP}$ qui est minimum. Le support anti-réfléchissant idéal, qui vérifie $R_{NP} = 0$ ne peut être obtenu que pour un seul angle d'incidence $\theta_0 = 0$ et ne peut être réalisé sur un substrat 1 d'indice $n_2$ différent de $n_0$ où $n_2$ est l'indice de réfraction complexe du substrat 1, qu'en déposant une seule couche 2 d'épaisseur optique $\tfrac{\lambda}{4}$ et d'indice optique $n_1$ tel que:

$$n_1 = \sqrt{n_0 n_2} \quad (E10)$$

$n_0$ étant l'indice optique du milieu incident.

L'épaisseur optique $\frac{\lambda}{4}$ signifie que l'épaisseur physique $e_1$ de la couche 2 est liée à la longueur d'onde $\lambda$ du faisceau lumineux permettant l'éclairage et à la direction $\theta_1$ dudit faisceau par rapport à la normale à la surface après réfraction dans la couche 2, ou angle d'incidence réfracté, par la relation:

$$n_1 e_1 \cos\theta_1 = \frac{\lambda}{4} + k\frac{\lambda}{2} \qquad (E11)$$

avec $k$ entier et $\cos\theta_1 = \sqrt{1 - \left(\frac{n_0}{n_1}\right)^2 \sin^2\theta_0}$ .

Dans, le cas considéré, cette relation se réduit donc à:

$$n_1 e_1 = \frac{\lambda}{4} + k\frac{\lambda}{2} \qquad (E11\ bis)$$

Rappelons que l'angle réfracté $\theta_1$ est lié à l'angle incident $\theta_0$ sur le support par la relation de Snell: $n_1\sin\theta_1 = n_0\sin\theta_0$ où $n_0$ est l'indice optique du milieu incident. De même, nous avons $n_2\sin\theta_2 = n_0\sin\theta_0$. Rappelons enfin que $\sin^2\theta_i + \cos^2\theta_i = 1$ dans tous les milieux.

En pratique, il est souvent préférable d'utiliser des supports AR non idéaux mais peu sensibles à la longueur d'onde $\lambda$ ou à l'angle d'incidence $\theta_0$ du faisceau lumineux incident. Ces supports sont obtenus par des empilements multicouches appelés traitements anti-reflets. Dans un mode de réalisation, ces traitements sont utilisés pour éliminer les reflets sur les verres de lunettes ou pour éliminer la lumière parasite générée par les réflexions sur les dioptres des systèmes optiques.

Il existe cependant d'autres cas où les supports AR plus sélectifs et plus efficaces sont recherchés, par exemple pour l'élaboration de filtres interférentiels passe-bande étroits en transmission.

### V.2) supports et revêtements "AR-Pol"en lumière polarisée.

L'invention concerne des supports similaires aux supports anti-réfléchissants, mais destinés à être utilisés en lumière polarisée. Ils se différencient des supports anti-réfléchissants par leur composition et par leurs propriétés optiques. Nous les désignons par l'appellation "AR-Pol".

Ces nouveaux supports forment un ensemble encore plus vaste et plus diversifié que les supports anti-réfléchissants classiques, et peuvent intervenir comme accessoires ou comme composants dans de nombreux procédés ou dispositifs. Cet ensemble est le premier objet de la présente invention. Il se subdivise en familles correspondant à des regroupements par nature ou par fonction dont nous donnons ici quelques exemples. Chaque famille est désignée par une appellation "AR-( )-Pol-( )-( )... ", où les parenthèses successives représentent les précisions supplémentaires permettant de la définir.

Des équations E2 à E9 découlent les relations d'ordre suivantes:

$$R\left(\frac{\pi}{2}\right) \leq R(\phi) \qquad (I1)$$

pour tout $\phi$ ,et:

$$4\,R\left(\frac{\pi}{2}\right) \leq 4\,R\left(\frac{\pi}{4}\right) = R_{NP} \leq 4R(0) \qquad (I2)$$

Ainsi que le montrent les inégalités I1 et I2, l'intensité normalisée de l'image d'un support ou d'un échantillon isotrope est toujours plus faible entre deux polariseurs croisés que pour toute autre orientation relative des polariseurs et qu'en l'absence de polariseur.

### V.3) Microscope polarisant:

Comme il est bien connu, le coefficient d'extinction $C_\theta$ d'un microscope polarisant, est l'une de ses caractéristiques techniques importantes. Il doit être aussi faible que possible. Dans le cas d'un microscope fonctionnant en réflexion, il est défini comme le rapport des intensités réfléchies par un support parfaitement réfléchissant placé d'une part entre un premier et un deuxième polariseurs croisés et d'autre part, entre un premier et un deuxième polariseurs parallèles, soit:

$$Ce = \frac{I_0\left(\pi/2\right)}{I_0(0)} \qquad (E14)$$

L'examen des équations E5 et E7 montre que la définition du support parfaitement réfléchissant donnée par les équations E1 n'est pas suffisante car l'intensité recueillie $I(\phi)$ dépend des phases relatives des deux coefficients de Fresnel $r_p$ et $r_s$ à travers leur somme. Comme le but du coefficient d'extinction est de caractériser le microscope lui-même, il est nécessaire d'introduire davantage de précision dans la définition du support parfaitement réfléchissant en considérant soit la condition virtuelle $r_p = r_s = 1$, soit la condition $r_p = -r_s = 1$. La première condition n'étant par physiquement réaliste, elle est donc éliminée pour ne retenir que la seconde. De plus, on a toujours $r_p = -r_s$ pour un angle d'incidence du faisceau lumineux sur le support tel que $\theta_0 = 0$, ce qui permet d'associer le coefficient $Ce = 0$ au microscope idéal. Nous définissons le *Coefficient d'extinction* utile de l'ensemble formé par le microscope et l'échantillon comme le rapport:

$$C_u = \frac{I\left(\pi/2\right)}{I(0)} \qquad (E15)$$

l'échantillon étant au minimum constitué d'un support.

Pour un microscope polarisant fonctionnant en réflexion, la valeur de $C_u$ découle directement des équations E6 et E8:

$$C_u = \frac{R_{NP} - \frac{1}{4}\left|r_p - r_s\right|^2}{R_{NP} + \frac{1}{4}\left|r_p - r_s\right|^2} = \frac{R_{NP} - R^-}{R_{NP} + R^+} \qquad (E16)$$

qui s'écrit encore:

$$C_u = \frac{\frac{1}{4}\left|r_p + r_s\right|^2}{2R_{NP} - \frac{1}{4}\left|r_p + r_s\right|^2} = \frac{R^+}{R_{NP} - R^+} \qquad (E16 \text{ bis}),$$

puisque:

$$R_{NP} = \frac{1}{4}\left|r_p + r_s\right|^2 + \frac{1}{4}\left|r_p - r_s\right|^2 = R^+ + R^- \qquad (E16 \text{ ter})$$

Maximisation du coefficient d'extinction:

Le support anti-réfléchissant idéal correspond à $R_{NP} = 0$. D'après l'équation E2, cela implique à la fois $r_p = 0$ et $r_s = 0$, et donc $R(\phi) = 0$ quel que soit $\phi$. Le coefficient d'extinction utile n'est plus défini. On peut alors par prolongement le définir comme:

$$C_u = \lim_{R_{NP} \to 0} Cu \qquad (E17),$$

ce qui permet d'englober le cas limite du support anti-réfléchissant idéal dans la discussion qui suit.

D'après l'équation E16 bis, le coefficient d'extinction utile $C_u$ est une fonction croissante du rapport $\dfrac{|r_p + r_s|^2}{R_{NP}}$.

Pour améliorer le coefficient d'extinction, et donc l'abaisser, c'est ce rapport qu'il faut minimiser.

**VI. supports anti-réfléchissants entre polariseurs croisés AR-X-Pol**

Nous définissons la famille des supports AR-X-Pol comme la famille des supports pour lesquels le rapport $\dfrac{|r_p + r_s|^2}{R_{NP}}$ est rendu minimal, ce qui représente une règle de conception dudit support. De façon équivalente, nous en donnons la définition fonctionnelle suivante: c'est la famille des supports qui optimisent le coefficient d'extinction utile de l'ensemble [microscope + support] pour un microscope polarisant idéal.

Les supports AR-X-Pol idéaux s'obtiennent lorsque ce minimum est nul. Ils sont donc donnés par la condition $\sigma = 0$.

Nous définissons le revêtement AR-X-Pol comme la couche 2 qui permet de transformer un substrat 1 donné en un support AR-X-Pol.

**VI.1) supports AR-X-Pol-SD-1D**

Ces supports correspondent au cas où les matériaux utilisés pour le substrat 1 et la couche 2 sont non absorbants, ce qui signifie que le module de la partie imaginaire de leur indice est inférieur à 0,01.

L'expression de $r_p$ et $r_s$ pour un solide d'indice optique $n_2$ recouvert -d'une seule couche 2 d'indice $n_1$ et d'épaisseur $e_1$ dans un milieu ambiant d'indice $n_0$ est classiquement donnée par :

$$r_m = \frac{r_{01(m)} + r_{12(m)} e^{(-2j\beta_1)}}{1 + r_{01(m)} r_{12(m)} e^{(-2j\beta_1)}} \qquad (E17)$$

[ Azzam et Bashara, "ellipsometry and polarised light", North-Holland, 1987], avec: soit $m = s$, soit $m = p$, selon la polarisation considérée et avec:

$$\beta_1 = \frac{2\pi n_1 e_1 \cos\theta_1}{\lambda} \qquad (E18)$$

où $\theta_1 = \sqrt{1 - \left(n_0 / n_1\right)^2 \sin^2\theta_0}$ .

Cette équation nous permet d'écrire :

$$\sigma = r_p + r_s = \frac{\sigma_{01} + \sigma_{12}(1 + \pi_{01})e^{(-2j\beta_1)} + \sigma_{01}\pi_{12}e^{(-4j\beta_1)}}{(1 + r_{01(p)} + r_{12(p)}e^{(-2j\beta_1)})(1 + r_{01(s)}r_{12(s)}e^{(-2j\beta_1)})} \quad (E19)$$

où $\sigma_{ij}$ et $\pi_{ij}$ représentent respectivement la somme et le produit des coefficients de Fresnel:

$$r_{ij(p)} = \frac{n_j \cos\theta_i - n_i \cos\theta_j}{n_j \cos\theta_i + n_i \cos\theta_j} \quad (E20)$$

et

$$r_{ij(s)} = \frac{n_i \cos\theta_i - n_j \cos\theta_j}{n_i \cos\theta_i + n_j \cos\theta_j} \quad (E21)$$

### VI.1-1) Les supports AR- X-Pol- SD-1 D idéaux

Ces supports sont obtenus lorsque $\sigma = 0$ (E19 bis)

Contrairement à la condition $[R_{NP} = 0]$ qui définit les supports antiréfléchissants classiques idéaux, la condition $\sigma = 0$ est toujours vérifiée en incidence normale. Les cas dans lesquels cette condition est également vérifiée pour un angle d'incidence non nul, seront examinés ci-dessous.

Les matériaux considérés étant diélectriques ou quasi-diélectriques, $r_{ij(p)}$ et $r_{ij(s)}$ sont réels, et donc $\sigma_{ij}$ et $\pi_{ij}$ sont réels. La situation recherchée correspond donc au cas où $e^{-2j\beta}$ est réel, ce qui entraîne, soit :

$$2\beta_1 = (2k + 1)\pi \quad (E22)$$

soit:

$$2\beta_1 = 2k\pi \quad (E23)$$

avec $k$ entier, c'est à dire soit:

$$n_1 e_1 \cos\theta_1 = \frac{\lambda}{4} + k\frac{\lambda}{2} \quad (E24)$$

soit:

$$n_1 e_1 \cos\theta_1 = k\frac{\lambda}{2} \quad (E25)$$

La condition E24 est identique à la condition E11 qui est l'une des relations définissant les supports anti-réfléchissants classiques. On a donc $e^{-2j\beta} = \pm 1$. La recherche des solutions de l'équation (E19 bis) se réduit à la résolution des équations:

$$\sigma_{01}(1 + \pi_{12}) - \sigma_{12}(1 + \pi_{01}) = 0 \quad (E26)$$

et:

$$\sigma_{01}(1 + \pi_{12}) + \sigma_{12}(1 + \pi_{01}) = 0 \quad (E27)$$

On note $c_k^2 = \cos^2\theta_k$ et $s_k^2 = \sin^2\theta_k$ pour tous les milieux.

Rappelons la relation de Snell: $n_k\sin\theta_k = n_0\sin\theta_0$

Il est facile d'établir:

$$\sigma_{ij} = \frac{2n_i n_j (c_i^2 - c_j^2)}{n_i n_j (c_i^2 + c_j^2) + c_i c_j (n_i^2 + n_j^2)} \quad (E28)$$

et:

$$1 + \pi_{ij} = \frac{2n_i n_j (c_i^2 + c_j^2)}{n_i n_j (c_i^2 + c_j^2) + c_i c_j (n_i^2 + n_j^2)} \quad (E29)$$

d'où:

$$\frac{\sigma_{ij}}{1 + \pi_{ij}} = \frac{(c_i^2 - c_j^2)}{(c_i^2 + c_j^2)} \quad (E30)$$

L'équation E26 se réduit ainsi à:

$$c_0 c_2 = c_1^2 \quad (E31)$$

qui s'écrit encore:

$$2 n_0^2 n_2^2 - n_1^2 (n_0^2 + n_2^2) = (n_0^2 n_2^2 - n_1^4)\sin^2\theta_1 \quad (E32)$$

Cette équation peut être résolue sans difficulté par rapport à chacun de ses paramètres.

Elle n'est jamais satisfaite avec un support anti-réfléchissant-classique.

Dans le cas où l'angle d'incidence est très petit, cette condition se réduit à:

$$\frac{2}{n_1^2} = \frac{1}{n_0^2} + \frac{1}{n_2^2} \quad (E33)$$

Le couple d'équations E25 et E27 n'a pas de solution pour $n_0 \neq n_2$.

Les deux formules E24 et E32 (ou de façon équivalente E35 bis) définissent la famille de supports AR-X-Pol-SD-1D idéaux pour un angle d'incidence arbitraire défini indifféremment par sa valeur $\theta_0$ dans le milieu ambiant (3) ou par sa valeur réfractée $\theta_1$ dans la couche (2) et également pour un éclairage axial convergent défini par un angle réfracté moyen $<\theta_1>$.

Les deux formules E24 et E33 définissent la sous-famille de supports AR-X-Pol-SD-1D idéaux pour un instrument d'optique avec un éclairage annulaire défini par un angle d'incidence réfracté $\theta_1$ ou avec un éclairage axial convergent d'ouverture faible et définie par un angle réfracté moyen $<\theta_1>$.

**Propriétés des équations E32 et E33 et conséquences:**

Les 4 variables $n_0$, $n_2$, $n_1$ et $\sin\theta_1 = \dfrac{n_0}{n_1}\sin\theta_0$ ne sont pas indépendantes. Il suffit de considérer les variables réduites $x = \left(\dfrac{n_1}{n_0}\right)^2$ et $y = \left(\dfrac{n_2}{n_0}\right)^2$ pour décrire toutes les situations.

L'équation E32 devient alors:

$$x^2(y + c_0^2) - 2\,xy + ys_0^2 = 0 \qquad (E34)$$

dont les solutions sont données par

i) les solutions en x :

$$x = \frac{y + c_0\sqrt{y(y - s_0^2)}}{y + c_0^2} \qquad (E35)$$

que nous pouvons aussi écrire:

$$n_1^2 = \frac{n_2^2 + \sqrt{n_2^2\cos^2\theta_0(n_2^2 - n_0^2\sin^2\theta_0)}}{n_2^2 + n_0^2\cos^2\theta_0} \qquad (E35bis)$$

ii) les solutions en $y$:

$$y = \frac{c_0^2 x^2}{c_0^2 - (x - 1)^2} \qquad (E36)$$

iii) les solutions en $\theta_0$ :

$$c_0^2 = \frac{y(x - 1)^2}{y - x^2} = \frac{n_2^2(n_1^2 - n_0^2)^2}{n_0^2(n_0^2 n_2^2 - n_1^4)} \qquad (E37)$$

iv) la variation de x avec l'angle d'incidence $\theta_0$:

$$\frac{dx}{d\theta_0} = -\sin 2\theta_0 \frac{2y(x-1)(y-x)}{(y-x^2)^2} = -\sin 2\theta_0 \frac{2n_0^2 n_2^2 (n_1^2 - n_0^2)(n_2^2 - n_0^2)}{(n_0^2 n_2^2 - n_1^4)^2} \quad \text{(E38)}$$

qui montre que l'indice optimal $n_1$ de la couche 2 décroît quand l'angle d'incidence augmente.

Pour des incidences faibles, l'évolution de $n_1$ avec $\theta_0$ est décrite par l'approximation:

$$x \approx \frac{2y}{(1+y)}\left(1 - \frac{(y-1)^2}{4y(y+1)}\theta_0^2\right) = \frac{2n_2^2}{(n_0^2 + n_2^2)} \quad \text{(E39)}$$

soit:

$$n_1^2 \approx \frac{2n_0^2 n_2^2}{(n_0^2 + n_2^2)} - n_0^2 \left(\frac{n_2^2 - n_0^2}{n_2^2 + n_0^2}\right)^2 \frac{\theta_0^2}{2} \quad \text{(E40)}$$

qui montre à nouveau que l'indice optimal décroît quand l'angle d'incidence augmente.

Cette dépendance est d'autant plus faible que $y$ est proche de 1.

Or, pour un microscope parfait ($C_e = 0$), le coefficient d'extinction utile est toujours nul en incidence normale ($C_u = 0$).

Un support AR-X-POL optimisé pour un angle non nul, par exemple de l'ordre de 20 degrés, est optimal pour travailler avec un éclairage annulaire correspondant. Mais de plus, puisqu'il permet d'obtenir $C_u = 0$ à la fois pour une incidence nulle et pour une incidence non nulle, il permet de conserver un excellent coefficient d'extinction utile sur l'ensemble du cône d'ouverture d'un éclairage axial convergent, de 0 à 30 degrés par exemple. Cela constitue un avantage considérable des revêtements AR-X-POL sur les revêtements anti-réfléchissants classiques pour toutes les applications des supports anti-réfléchissants compatibles avec l'utilisation d'une lumière polarisée.

Cette flexibilité sur l'angle d'incidence se traduit par une flexibilité analogue sur la longueur d'onde de l'éclairage à faible incidence. En effet, par différenciation logarithmique de l'équation E24 par exemple, nous obtenons:

$$-\tan(\theta_1)\,\Delta\theta_1 = \frac{\Delta\lambda}{\lambda}$$

qui montre qu'une variation de longueur d'onde aussi grande que 30% avec un éclairage annulaire est équivalente à une ouverture de 30 degrés sur un éclairage convergent avec une longueur d'onde fixe. Cette variation de longueur d'onde couvre l'ensemble du spectre visible autour de $\lambda = 0.55\mu$m.

Si l'on veut au contraire exploiter les effets de couleur à des fins de détection, l'utilisation d'un éclairage annulaire avec un angle d'incidence élevé permet d'apporter une grande sensibilité à la longueur d'onde.

Les supports et revêtements AR-X-Pol sont donc particulièrement avantageux pour des utilisations en lumière blanche.

L'indice $n_1$ de la couche 2 est intermédiaire entre l'indice $n_2$ du substrat 1 sur lequel elle est formée et l'indice $n_0$ du milieu ambiant. Les équations E32 et E33 sont symétriques en $n_0$ et $n_2$.

Cela montre que ladite couche 2 possède les mêmes propriétés que la lumière se réfléchisse du milieu de faible indice vers le milieu de fort indice ou du milieu de fort indice vers le milieu de faible indice.

Ainsi, on peut éteindre la réflexion d'une lumière polarisée lorsque le substrat 1 est l'extrémité d'une fibre optique, ou bien une lame ou le fond d'une boîte de Pétri lorsqu'on les observe par en-dessous sur un microscope inversé.

## VI.1-2) supports AR-Pol-X-SD-1D approchés

Lorsque les trois indices ($n_0$, $n_1$ et $n_2$) sont imposés ou contraints, le minimum de $|\sigma|$ par rapport à $e_1$ n'est

plus nul si la condition E32 ne se trouve pas vérifiée, mais ce minimum existe néanmoins et correspond à la meilleure extinction possible compte tenu des contraintes.

La meilleure extinction possible entre polariseurs croisés s'obtient alors en recherchant le minimum de $|\sigma|$ (ou de façon équivalente celui de $|\sigma|^2$) par rapport à $e_1$. Avec $\theta_1$ et $n_1$ fixés, cela revient à les chercher par rapport à $\beta_1$. Posons $z = e^{-2j\beta_1} = \cos2\beta_1 - j\sin2\beta_1$. L'expression de $\sigma$ donnée par l'équation E19 est le rapport de 2 polynômes de degré 2 en $z$. Puisque $|z| = 1$, le carré du module de chacun de ces polynômes ne contient que des termes constants, des termes en $\cos2\beta_1$, et des termes en $\cos4\beta_1$. La dérivée de leur rapport est donc proportionnelle à $\sin2\beta_1$. Les solutions de $\sin2\beta_1 = 0$ sont donc des solutions de l'équation $\dfrac{d|\sigma|^2}{d\beta_1} = 0$. On retrouve donc les solutions données par les équations E24 et E25. Ainsi, même lorsque les conditions E32 ou E33 ne sont pas satisfaites, on peut optimiser l'épaisseur de la couche 2 pour optimiser le coefficient d'extinction utile sous un microscope polarisant, et cet optimum correspond soit à une couche 2 "à $\dfrac{\lambda}{4}$", soit à une couche 2 "à $\dfrac{\lambda}{2}$".

### VI.2) supports AR-X-Pol-1

Nous décrivons ici les règles de construction des supports AR-X-Pol constitués d'un substrat 1 solide recouvert d'une seule couche 2 dans le cas général où le support, la couche 2, et le milieu incident 3 ont des indices optiques complexes quelconques (milieux éventuellement absorbants).

### VI.2-1) supports AR-X-Pol-1 idéaux

Parmi ceux-ci, les supports idéaux pour l'angle $\theta_0$ sont obtenus lorsque $\sigma = 0$, où la quantité $\sigma$ est donnée par l'équation E19, où $\beta_1$ est lié à l'angle $\theta_1$ par la relation E18, $\theta_2$, $\theta_1$ et $\theta_0$ étant toujours liés par la relation de Snell étendue aux fonctions complexes.
L'équation:

$$\sigma_{01} + \sigma_{12}(1 + \pi_{01})z + \sigma_{01}\pi_{12}z^2 = 0 \qquad \text{(E19 ter)}$$

a toujours 2 solutions $z_1$ et $z_2$ ordonnées selon leur module, $|z_1| < |z_2|$, qui s'expriment en fonction des coefficients $\sigma_{01}$, $\sigma_{12}$, $\pi_{01}$ et $\pi_{12}$ eux mêmes fonctions des trois indices $n_0$, $n_1$, $n_2$ et de l'angle $\theta_0$.
Le milieu 1 n'étant pas amplificateur, la solution $z_1$ est la seule acceptable. Son expression se traduit par une relation qui définit numériquement la famille des supports AR-X-POL-1 idéaux. Cette famille est bornée par la condition $|z_1| \le 1$.

### VI.2-2) supports AR-X-Pol-1 approchés.

Lorsque les trois indices sont imposés ou contraints et que l'un d'entre eux au moins est complexe, le minimum de $|\sigma|$ par rapport à $e_1$ n'est plus nul si la condition E42 n'est pas vérifiée par la solution de plus petit module de l'équation E19ter, mais il existe néanmoins puisque $|\sigma|$ est une fonction quasi-périodique de $e_1$. On entend ici par "quasi-périodique" que $n_1$ étant complexe, le module de $e^{-4j\beta1}$ s'amortit quand $e_1$ augmente.

Le meilleur coefficient d'extinction possible compte tenu des contraintes est obtenu en recherchant le minimum de $|\sigma|$ (ou de façon équivalente celui de $|\sigma|^2$) par rapport à $e_1$. A $\theta_1$ et $n_1$ fixés, cela revient à le chercher par rapport à la quantité complexe $\beta_1$, ce qui peut être fait numériquement.

L'épaisseur $e_1$ est ensuite donnée par l'équation:

$$e_1 = \frac{\lambda\beta_1}{2\pi|n_1 \cos\theta_1|} \qquad \text{(E43)}$$

qui est une généralisation de l'équation E18.

VI.2- 3) revêtement diélectrique idéal sur support absorbant.

Un cas particulier utile est celui où seul le support est absorbant, les indices des autres milieux restant réels. Alors $\beta_1$ est réel, et $|\sigma|$ est une fonction périodique de $\beta_1$.

Mais comme $\sigma_{12}$ et $\pi_{12}$ sont complexes, $e^{-2j\beta_1}$ n'est plus réel. L'épaisseur optimale qui annule $|\sigma|$ est donc donnée par.

$$n_1 e_1 \cos\theta_1 = e_c + k\frac{\lambda}{2} \qquad (E44)$$

où la plus petite des solutions $e_c$ n'est plus égale ni à $\frac{\lambda}{4}$ ni à $\frac{\lambda}{2}$.

Cette équation généralise les équations E24 et E25.

Ainsi, dans le cas d'un substrat 1 absorbant, le revêtement AR-X-POL se différencie d'un revêtement anti-réfléchissant classique non seulement par son indice, mais aussi par son épaisseur.

**VII. Supports amplificateurs de contraste idéaux** ne concernent pas, en tant que tels, la présente invention.

Pour la visualisation du bord d'un objet d'étude ayant la forme d'un film mince posé sur la surface du support, il convient d'exploiter d'une part la différence entre les intensités recueillies en observant le film et d'autre part la surface du substrat 1 nue qui sont notées $I_F$ et $I_S$ (ou de façon équivalente $I(F)$ et $I(S)$). Ces intensités sont proportionnelles aux intensités normalisées correspondantes.

Le contraste du bord du film est donné par la relation suivant:

$$C_f = \frac{I_F - I_S}{I_F - I_S} \qquad (E50)$$

$I_F$ et $I_S$ étant positifs, $C_f$ est une fonction strictement croissante du rapport $\frac{I_F}{I_S}$.

Pour bien visualiser le film, il faut maximiser $|C_f|$ et donc rendre le rapport $\frac{I_F}{I_S}$ maximal ($I_S \rightarrow 0$, pour tendre vers un contraste de 1) ou minimal ($I_F \rightarrow 0$, pour tendre vers un contraste de -1). Il faut donc éteindre soit la surface, soit le film.

Une méthode de visualisation sensible repose d'une part sur une bonne extinction, et d'autre part sur une extinction critique, c'est à dire très sensible à l'épaisseur de la dernière couche 2 de l'empilement. Les supports anti-réfléchissants AR-X-Pol présentent ces qualités et sont donc également des supports amplificateurs de contraste.

Les performances d'une méthode de visualisation peuvent être quantifiées par le contraste obtenu lorsque le film observé devient extrêmement mince. Dans ce cas, $I_F$ et $I_S$ deviennent voisins et $dI = I_F - I_S$ s'apparente à un élément différentiel.

Pour un film d'épaisseur très mince $\Delta e$ posé sur le support, on peut écrire au premier ordre en $\Delta e$:

$$\frac{I_F}{I_S} = 1 + \frac{1}{I_s}\frac{dI}{de}\Delta e \approx 1 + \Delta e \frac{d}{de}\ln I \qquad (E51)$$

où on a supposé que l'indice optique du film est identique à celui de la couche 2 supérieure, c'est à dire de la dernière couche 2 de l'empilement, et où $\frac{dI}{de}$ est la dérivée de l'intensité réfléchie par le substrat 1 nu par rapport à l'épaisseur e de cette couche 2.

Dans le cas où le substrat 1 est composé d'un support solide recouvert d'une seule couche 2 diélectrique, e est donc l'épaisseur de la couche 2 unique. Le film apparaît donc comme une simple fluctuation d'épaisseur de la couche 2 supérieure.

Un contraste optimal est donc obtenu pour les deux situations:

i) $\dfrac{d}{de} \ln I \;\rightarrow\; +\infty$ (extinction du support, $C_f = +1$)

ii) $\dfrac{d}{de} \ln I = -1$ (extinction du film, $C_f = -1$)

Le contraste optimal ne peut être atteint qu'avec une extinction totale.

La sensibilité de la visualisation est, en *Angsfröms$^{-1}$* :

$$\frac{C_f}{\Delta e} = \frac{1}{2}\,\frac{d\ln I}{de} \qquad \text{(E52)}$$

Elle n'a de sens que lorsque le contraste est faible (quand $\dfrac{d\ln I}{de}\,\Delta e$ est très petit devant 1) et permet de comparer des seuils de détection.

**VII.1) en lumière non polarisée**

Dans l'équation E51, $\dfrac{I_F}{I_S} = \dfrac{R_{NP}(F)}{R_{NP}(S)} \approx 1 + \Delta e\,\dfrac{d}{de}\ln R_{NP}.$

Puisque l'extinction totale n'est possible qu'avec un support anti-réfléchissant parfait et puisque ce support n'existe que pour une incidence normale, les performances de ce support pour la visualisation en lumière convergente, c'est à dire pour l'imagerie, sont limitées.

**VII.2) entre polariseur et analyseur croisés**

**L'équation E51 devient**

$$\frac{R_F(\phi)}{R_S(\phi)} \approx 1 + \Delta e\,\frac{d}{de}\ln|\sigma|^2 \qquad \text{(E52)}$$

Un contraste optimal est donc obtenu pour les deux situations:

i) $\dfrac{d}{de}\ln |\sigma|^2 \;\rightarrow\; +\infty$ (extinction du support, $C_f = +1$)

ii) $\dfrac{d}{de}\ln |\sigma|^2 = -1$ (extinction du film, $C_f = -1$)

Chacune de ces situations correspond à $\sigma = 0$ c'est à dire à un support AR-X-Pol idéal. Dans la première, l'épaisseur optimale e est celle du revêtement seul. Dans la seconde, c'est la somme des épaisseurs du revêtement et de l'objet. La sensibilité de la visualisation est donnée par, en [Angströms$^{-1}$] :

$$\frac{C_F}{\Delta e} = \frac{d}{de}\ln |r_p + r_s|$$

Il résulte des considérations précédentes que :

1) Les meilleurs supports amplificateurs de contraste sont les supports anti-réfléchissants idéaux.
2) Les supports AR-X-Pol sont les seuls supports capables de fournir une extinction totale en éclairage annulaire et une extinction quasi-parfaite en éclairage faiblement convergent. L'utilisation de ces supports entre polariseurs croisés permet d'obtenir des contrastes nettement meilleurs que tous les autres supports dans tous les modes d'imagerie sans marquage en lumière incohérente.

**VIII. supports amplificateurs de contraste non idéaux en lumière polarisée** (ne concernent pas, en tant que tels, la présente invention)

**VIII.1) entre polariseurs croisés**

Lorsque le support n'est plus idéal, l'équation E19 bis n'est plus satisfaite. C'est en particulier le cas quand l'indice de la couche 2 est imposé et qu'elle n'a plus de solution parce que la relation E26 n'est plus vérifiée. Alors, l'extinction totale n'est plus possible et la condition $C_f = + 1$ ne peut plus être atteinte (la condition $C_f = - 1$ peut encore l'être pour un objet très particulier). Nous montrons que le contraste n'est plus optimisé lorsque le minimum de l'intensité réfléchie est atteint mais pour des épaisseurs de couche 2 situées de part et d'autre de ce minimum, le minimum correspondant à l'inversion de signe du contraste.

Dans ce cas le contraste est optimisé quand:

i) $\dfrac{d}{de}\ln|\sigma|^2$ maximum (extinction partielle du support, $C_f$ maximum)

ii) $\dfrac{d}{de}\ln|\sigma|^2$ minimum (extinction partielle du film, $C_f$ minimum)

C'est à dire quand :

$$\frac{d^2}{de^2}\ln|\sigma|^2=0 \quad (E57)$$

Nous nous limitons maintenant au cas de matériaux diélectriques et nous cherchons l'épaisseur optimale de la couche 2 diélectrique pour l'optimisation du contraste avec un revêtement amplificateur à une couche 2.

L'épaisseur d'inversion de contraste $e_1$ est donnée par l'équation E24 qui correspond à la condition que $e^{-2j\beta_1}$ soit réel. Afin d'explorer les épaisseurs situées de part et d'autre de $e_1$, nous posons $\beta_1 = \dfrac{\pi}{2} + \varepsilon$ .

La relation E26 n'étant plus complètement vérifiée, nous posons :

$$\Delta \equiv \frac{\sigma_{12}(1+\pi_{01})-\sigma_{01}(1+\pi_{12})}{\sigma_{01}} \quad (E58)$$

Le développement en $\varepsilon$ de $|\sigma|^2$ donne :

$$|\sigma|^2 = \sigma_{01}^2\left(\frac{A+4B\varepsilon^2}{C+4D\varepsilon^2}\right) \quad (E59)$$

expression dans laquelle:

$$A = \Delta^2 \qquad (E60)$$

$$B = (1-\pi_{12})^2 + \Delta(1+\pi_{12}) \quad C = (1-P+\pi_{01}\pi_{12}) \quad D = P+P\pi_{01}\pi_{12} - 4\pi_{01}\pi_{12}$$

et où :

$$P = r_{01(p)}r_{12(p)} + r_{01(s)}r_{12(s)} \quad \text{(E61)}$$

Il s'ensuit:

$$\frac{d}{d\varepsilon}\ln\left|\sigma^2\right| = \frac{8B\varepsilon}{A+B\varepsilon^2} - \frac{8D\varepsilon}{C+D\varepsilon^2} \quad \text{(E61)}$$

L'équation E57 a pour solution:

$$4\varepsilon^2 = \frac{AC}{BC+AD} \quad \text{(E62)}$$

Si le revêtement reste performant, $\Delta$ est petit, et dans ce cas $\varepsilon$ est proche de $\frac{\Delta}{2}$.

La relation de définition E18 nous donne finalement les deux épaisseurs $e_1$' et $e_1$" qui optimisent le contraste:

$$e_1' = \frac{\lambda}{4}\left(1+\frac{2\varepsilon}{\pi}\right) + k\frac{\lambda}{2} \quad \text{(E63)}$$

$$e_1'' = \frac{\lambda}{4}\left(1-\frac{2\varepsilon}{\pi}\right) + k\frac{\lambda}{2}$$

Les formules E63 généralisent la formule E24 aux supports amplificateurs de contraste non idéaux.
Nous désignons la famille des supports amplificateurs de contraste par l'appellation supports Ampli-Pol lorsqu'il y a lieu de les distinguer des supports AR-Pol. Entre polariseurs croisés, ils deviennent les supports Ampli-X-Pol, etc..

## IX. Supports AR-X-Pol et Ampli-X-Pol anisotropes

Dans toute utilisation d'un support AR-Pol ou d'un support Ampli-Pol, il est essentiel d'optimiser ses performances (taux d'extinction utile $C_u$ ou contraste $C_f$). Pour cela, il faut satisfaire aux relations qui le définissent avec précision, ce qui engendre des difficultés de fabrication (tolérance sévère sur l'épaisseur e par exemple) et des difficultés de mise en oeuvre (réglage des paramètres du microscope pour une visualisation par exemple).
Afin de diminuer ces difficultés, il est avantageux d'introduire dans les supports un élément de réglage. Cet élément est apporté par l'utilisation de matériaux aux propriétés optiques anisotropes dans la réalisation des supports. Par défaut, le matériau anisotrope est le substrat 1, la couche 2 et le milieu incident restant isotropes. Les axes principaux ($x$, $y$, et $z$) du matériau anisotrope sont parallèles et perpendiculaire à la surface du support. Les coefficients de Fresnel du support sont remplacés par une matrice de réflexion:

$$\begin{pmatrix} r_{pp} & r_{ps} \\ r_{sp} & r_{ss} \end{pmatrix} \quad \text{(E70)}$$

dans laquelle compte tenu des orientations des axes principaux $r_{ps} = r_{sp} = 0$, ce qui permet d'exprimer l'amplitude réfléchie en fonction de l'amplitude incidente comme:

$$\begin{pmatrix} E_{r_p} \\ E_{r_s} \end{pmatrix} = \begin{pmatrix} r_{px} & 0 \\ 0 & r_{sx} \end{pmatrix} \begin{pmatrix} E_{ip} \\ E_{is} \end{pmatrix} \qquad (E71)$$

quand l'axe x est dans le plan d'incidence, et comme:

$$\begin{pmatrix} E_{r_p} \\ E_{r_s} \end{pmatrix} = \begin{pmatrix} r_{py} & 0 \\ 0 & r_{sy} \end{pmatrix} \begin{pmatrix} E_{ip} \\ E_{is} \end{pmatrix} \qquad (E71)$$

quand l'axe y est dans le plan d'incidence. A l'interface entre le milieu isotrope i et le milieu anisotrope j, les coefficients $r_{ij(px)}$ , $r_{ij(sx)}$ , $r_{ij(py)}$ et $r_{ij(sy)}$ sont donnés par

$$r_{ij(px)} = \frac{n_{jx} n_{jz} c_i - n_i \left( n_{jz}^2 - n_i^2 s_i^2 \right)^{\frac{1}{2}}}{n_{jx} n_{jz} c_i + n_i \left( n_{jz}^2 - n_i^2 s_i^2 \right)^{\frac{1}{2}}} \qquad (E72)$$

$$r_{ij(sx)} = \frac{n_i c_i - \left( n_{jy}^2 - n_i^2 s_i^2 \right)^{\frac{1}{2}}}{n_i c_i + \left( n_{jy}^2 - n_i^2 s_i^2 \right)^{\frac{1}{2}}}$$

si le plan d'incidence est parallèle à x, et:

$$r_{ij(py)} = \frac{n_{jy} n_{jz} c_i - n_i \left( n_{jz}^2 - n_i^2 s_i^2 \right)^{\frac{1}{2}}}{n_{jy} n_{jz} c_i + n_i \left( n_{jz}^2 - n_i^2 s_i^2 \right)^{\frac{1}{2}}} \qquad (E73)$$

$$r_{ij(sy)} = \frac{n_i c_i - \left( n_{jx}^2 - n_i^2 s_i^2 \right)^{\frac{1}{2}}}{n_i c_i + \left( n_{jx}^2 - n_i^2 s_i^2 \right)^{\frac{1}{2}}}$$

La formule E17 restant toujours valide pour r(mx) et r(my) à la fois (avec m = p ou m = s) s'il est parallèle à y.

Les équations E72 montrent que, selon l'orientation relative $\phi =(P,x)$ de l'échantillon et du polariseur $P$ en azimut, obtenue en effectuant une rotation de l'un par rapport à l'autre autour de la normale, on obtient des coefficients de Fresnel effectifs $r_{ij(p)}$ et $r_{ij(s)}$ variables, donnés par les combinaisons linéaires suivantes:

$$r_{ij(p)} = r_{ij(px)} \cos \varphi + r_{ij(py)} \sin \varphi \qquad (E74)$$

$$r_{ij(s)} = r_{ij(sx)} \cos \varphi + r_{ij(sy)} \sin \varphi$$

Un raisonnement analogue s'applique au cas où le substrat 1 est isotrope et la couche 2 anisotrope.

Ainsi, un support optimal pour une visualisation sous microscope en lumière polarisée est anisotrope et tel que tel que la valeur optimale de ses coefficients de réflexion $r_p$ et $r_s$ soit obtenue pour un angle $\phi$ intermédiaire entre 0 et $\dfrac{\pi}{2}$ et de préférence égal à $\dfrac{\pi}{4}$ pour donner la latitude de réglage maximale.

**X. Polarisation circulaire**

L'invention ne saurait être limitée à la description qui précède. Le faisceau lumineux utilisé a ainsi dans un autre mode de réalisation une polarisation circulaire et les supports AR-Pol et Ampli-Pol présentent avantageusement une même efficacité. Comme il est bien connu, les observations et mesures entre polariseur et analyseur croisés sont alors remplacées par des observations et mesures équivalentes entre [polariseur suivi d'une lame $\dfrac{1}{4}$ d'onde] et [lame $\dfrac{1}{4}$ d'onde identique suivie d'un polariseur (ou analyseur) parallèle au premier, préférentiellement identique]. Ceci vaut aussi pour toutes les techniques de visualisation et de mesure en contraste interférentiel différentiel (DIC).

Le support de l'invention a fait l'objet de plusieurs mises en oeuvre présentées dans les exemples suivants pour lesquels la longueur d'onde arbitraire d'éclairage est, sauf spécification contraire, $\lambda$ = 540 nm.

On a constaté que lorsqu'un support conforme à l'invention a été déterminé, il est possible d'en déduire d'autres qui, du point de vue de l'invention, ont des propriétés comparables en modifiant l'épaisseur $e_1$ de la couche 2 et la longueur $\lambda$ d'utilisation tout en maintenant leur rapport $\dfrac{e_1}{\lambda}$ constant. Cela ouvre de très larges possibilités.

Exemple 1

Les supports AR-Pol, bien qu'obéissant à des règles de construction très pointues, se déclinent à l'infini. Quatre exemples (indice $n_1$ et épaisseur de couche $e_1$(Å)) de supports AR-Pol-1 idéaux pour une incidence proche de la normale ($\theta_0$=5˚) sont présentés ci dessous. Ces exemples sont destinés à être utilisés comme supports porte-objet pour des observations et des mesures effectuées dans un milieu ambiant tel que l'air (le milieu incident étant l'air ou le substrat).

| substrat | $n_2$ | $n_1$ | $e_1$(Å) |
|---|---|---|---|
| or | 0.40 - 2.6$j$ | 1.70 | 694 |
| argent | 0.13 - 3.44$j$ | 1.59 | 795 |
| aluminium | 0.92 - 0.95$j$ | 2.01 | 346 |
| nickel | 1.76 - 3.2$j$ | 1.51 | 847 |

Nous donnons aussi pour ces substrats 1 les indices $n_1$ et les épaisseurs $e_1$ des revêtements à une couche 2 qui optimisent le contraste $C_f$ de toute observation entre polariseurs croisés avec un éclairage axial convergent sous une incidence de 0,2˚ (par convention $\theta_o$ = 0) et nous donnons la valeur $n_1$ et la valeur absolue du contraste $C_f$ obtenu avec un éclairage convergent d'ouverture 30˚ au bord d'un film de 1 nanomètre d'épaisseur ainsi que les épaisseurs $e_1$' et $e_1$" telles que définies par les équations 63.

L'indice $n_2$ est l'indice du matériau constitutif du support. Il est extrait de « Hand Book of Optics, Mc Graw Hill Professional Publishing New York 2000 » dans lequel une longueur d'onde particulière est définie pour chaque matériau.

| | | $\theta_0=0$ | $\theta_0=0$ | | $0<\theta_0<\dfrac{\pi}{6}$ | $0<\theta_0<\dfrac{\pi}{6}$ | $0<\theta_0<\dfrac{\pi}{6}$ | |
|---|---|---|---|---|---|---|---|---|
| substrat | $n_2$ | $n_1$ | $e_1$(Å) | $C_f$ | $n_1$ | $e_1'$(Å) | $e_1''$(Å) | $C_f$ |
| Or | 0.47 - 2.83$j$ | 1.65 | 800 | 1 | 1.58 | 870 | 880 | 0.17 |
| Argent | 0.2 - 3.44$j$ | 1.60 | 850 | 1 | 1.53 | 930 | 940 | 0.17 |
| aluminium | 1.44 + 5.23$j$ | 1.50 | 953 | 1 | 1.44 | 1 040 | 1 050 | 0.07 |
| Nickel | 1.58 - 3.42$j$ | 1.52 | 920 | 1 | 1.46 | 1 000 | 1 010 | 0.06 |

Par ailleurs, nous donnons aussi, pour ces substrats 1, les indices $n_1$, épaisseurs $e_1$ des revêtements à une couche 2 qui optimise le contraste $C_f$ de toute observation entre polariseurs croisés avec un éclairage annulaire sous une incidence de 20˚. Nous donnons la valeur absolue du contraste $C_f$ obtenu dans ces conditions, avec un éclairage convergent d'ouverture 30˚ ($\pi/6$) au bord d'un film de 1 nanomètre d'épaisseur. Les épaisseurs $e_1'$ et $e_1''$ sont celles données par les équations E63.

| | | $\theta_0=20˚$ | $\theta_0=20˚$ | | $0<\theta_0<\dfrac{\pi}{6}$ | $0<\theta_0<\dfrac{\pi}{6}$ | $0<\theta_0<\dfrac{\pi}{6}$ | |
|---|---|---|---|---|---|---|---|---|
| substrat | $n_2$ | $n_1$ | $e_1$(Å) | $C_f$ | $n_1$ | $e_1'$(Å) | $e_1''$(Å) | $C_f$ |
| Or | 0.40 - 2.6$j$ | 1.64 | 739 | 1 | 1.64 | 730 | 740 | 0.65 |
| Argent | 0.13 - 3.44$j$ | 1.55 | 838 | 1 | 1.55 | 832 | 842 | 0.85 |
| aluminium | 0.92 - 0.95$j$ | 1.89 | 399 | 1 | 1.89 | 395 | 415 | 0.25 |
| Nickel | 1.76 - 3.2$j$ | 1.48 | 890 | 1 | 1.48 | 880 | 905 | 0.50 |

Les indices $n_1$ sont très courants et les couches 2 peuvent être réalisées par toutes les techniques de dépôt classiques, par exemple dépôts d'oxydes réalisés par PECVD (Phase evaporation chemical vapor deposition).

Exemple 2

Des exemples (indice $n_1$) de supports AR-Pol-1 sont présentés ci-dessous pour un substrat 1 de silicium et pour des utilisations soit dans un milieu ambiant tel que l'air, soit en immersion.

Des supports AR-Pol idéaux anisotropes peuvent être obtenus en déposant sur un substrat 1 de silicium ($n_2$ = 4.12 - 0.05$j$) dopé ou non, clivé selon un plan 100 une couche 2 d'épaisseur optique $\dfrac{\lambda}{4}$ au sens de la relation E24 et d'indice $n_1$ égal à:

    1.37 quand le milieu incident est l'air (d'indice 1)
    1.79 quand le milieu incident est l'eau (d'indice 1.33)
    1.99 quand le milieu incident est une huile d'indice 1.5.

Les couches 2 ont alors des indices moins courants qui s'obtiennent préférentiellement:

- soit par des procédés sol-gel et aérogels conduisant à des silices poreuses (indice 1.37), l'indice étant également bien approché par une couche de $MgF_2$ (indice 1.38).
- soit par des techniques d'oxydation avec des mélanges de gaz conduisant à des mélanges de matériaux $SiO_2$ - $SiO$ (indice 1.79), ou à des couches d'oxynitrures $SiO_xN_y$ (indices 1.79 et 1.99) avec les proportions suivantes: x= 0.4 et y= 0.6 pour obtenir $n_1$ = 1.79 ; x=0 et y= 1 pour obtenir $n_1$ = 1.99.

L'indice $n_1$ = 1.37 peut aussi s'obtenir par dépôt de polymères fluorés (tels que des trifluoroalkyl-alkylsiloxanes ou des copolymères de trifluoroalkyl-alkylsiloxanes et de dimethylsiloxanes), le dépôt pouvant s'effectuer par spin-coating à partir d'une solution.

Les indices 1.79 et 1.99 peuvent aussi s'obtenir par toutes les techniques de dépôt, en particulier par dépôt PECVD de mélanges d'oxydes tels que $HfO_2$ et $Y_2O_3$ ou de tous les matériaux listés dans les dictionnaires de propriétés physiques des matériaux (par exemple: Handbook of Optical constants of solids, Vol. 1-5, Academic Press, Ed. Palik and Ghosh (1997)) ou dans les dictionnaires d'optique (par exemple: Handbook of optics, McGraw-Hill Professional Publishing, New-York, (2000)).

L'indice de certains matériaux change fortement avec la longueur d'onde de la lumière, et l'ajustement d'indice peut être remplacé par un ajustement de longueur d'onde; C'est par exemple le cas d'une couche 2 de *SiO* qui présente un indice utile de 1.95 pour $\lambda$ = 490 nm et de 1.99 pour $\lambda$ = 540 nm.

Exemple 3

Nous donnons ci-dessous quelques autres exemples de supports AR-Pol idéaux (qui sont donc aussi Ampli-Pol idéaux) pour différents milieux incidents et pour un éclairage annulaire de très faible incidence ($\theta_o$ = 5 degrés). L'épaisseur $e_1$ est en Angströms.

Un premier tableau est donné pour un angle d'incidence de 0,2˚. L'indice $n_2$ est l'indice du matériau constitutif du support. Il est extrait de « Hand Book of Optics, Mc Graw Hill Professional Publishing New York 2000 dans lequel une longueur d'onde particulière est définie pour chaque matériau.

| substrat | $n_2$ | $n_0$ | $n_1$ | $e_1$ |
|---|---|---|---|---|
| or | 0.47-2.83j | 1.33 | 2.42 | 490 |
| or | 1.5 | | 2.95 | 368 |
| argent | 2.0-3.44j | 1.33 | 2.35 | 526 |
| argent | | 1.5 | 2.8 | 417 |
| aluminium | 1.44+5.23j | 1.33 | 2.05 | 684 |
| aluminium | | 1.5 | 2.33 | 587 |
| nickel | 1.58-3.42j | 1.33 | 2.13 | 620 |
| nickel | | 1.5 | 2.5 | 505 |
| cadmium | 1.13-5.01j | 1 | 1.47 | 968 |
| cadmium | | 1.33 | 2.08 | 667 |
| cadmium | | 1.5 | 2.38 | 575 |
| étain | 1.43-5.25j | 1 | 1.48 | 975 |
| étain | 1.48-5.25j | 1 | 1.48 | 975 |
| | | 1.33 | 2.03 | 693 |
| | | 1.5 | 2.34 | 600 |
| cuivre | 0.52-2.57j | 1 | 1.68 | 768 |
| cuivre | | 1.33 | 2.52 | 448 |
| cuivre | | 1.5 | 3.05 | 338 |
| Fer (évaporé) | 1.51-1.63j | 1 | 1.545 | 802 |
| | | 1.33 | 2.24 | 459 |
| | | 1.5 | 2.72 | 332 |

Un deuxième tableau est donné pour un angle d'incidence de 5˚.

La longueur d'onde est $\lambda$ = 540 nm excepté pour le Cadmium où elle vaut 589,3 nm.

| substrat | $n_2$ | $n_0$ | $n_1$ | $e_1$ |
|---|---|---|---|---|
| or | 0.40 - 2.6*j* | 1.33 | 2.42 | 490 |

(suite)

| substrat | $n_2$ | $n_0$ | $n_1$ | $e_1$ |
|---|---|---|---|---|
| or | 0.40 - 2.6$j$ | 1.5 | 1.79 | 755 |
| argent | 0.13 - 3.44$j$ | 1.33 | 2.28 | 512 |
| argent | 0.13 - 3.44$j$ | 1.5 | 2.7 | 412 |
| aluminium | 0.92 - 0.95$j$ | 1 | 1.89 | 399 |
| nickel | 1.76 - 3.2$j$ | 1.33 | 2.11 | 572 |
| nickel | 1.76 - 3.2$j$ | 1.5 | 2.45 | 473 |
| cadmium | 1.13-5.01j | 1 | 1.49 | 970 |
| cadmium | 1.13-5.01j | 1.33 | 2.05 | 684 |
| cadmium | 1.13-5.01j | 1.5 | 2.36 | 582 |
| étain | 1.48-5.25j | 1 | 1.48 | 899 |
| étain | 1.48-5.25j | 1.33 | 2.02 | 640 |
| étain | 1.48-5.25j | 1.5 | 2.33 | 548 |
| cuivre | 1.04-2.59j | 1 | 1.62 | 746 |
| cuivre | 1.04-2.59j | 1.33 | 2.23 | 423 |
| cuivre | 1.04-2.59j | 1.5 | 2.83 | 351 |
| Fer (évaporé) | 1.51-1.63j | 1 | 1.54 | 737 |
| Fer (évaporé) | 1.51-1.63j | 1.33 | 2.23 | 423 |
| Fer (évaporé) | 1.51-1.63j | 1.5 | 2.72 | 305 |

Exemple 4

Nous donnons enfin un exemple avec un éclairage annulaire à une longueur d'onde $\lambda$ = 589,3 nm et un angle d'incidence important. Pour un support de cadmium et une observation dans un milieu ambiant tel que l'air sous un angle d'incidence unique de 30 degrés, la couche 2 idéale est obtenue pour $n_1$ = 1.42 et $e_1$= 1084 Angströms.

Les valeurs des indices sont tirées du livre de Bom and Wolf, intitulé "Principles of Optics : Electromagnetic Theory of Propagation, Interference and diffraction of Light", Cambridge University Press (1999) et du livre de E.D. Palik, intitulé « handbook of optical constants of solids », vol. 1 à 5, Academic Press (1985).

Applications possibles dans les industries de l'optique, dans l'amélioration des mesures ou l'observation en réflexion de films minces ou d'objets très petits sous microscope optique ou sous tout autre instrument d'imagerie optique tel que viseur, lunette, macroscope, loupe, loupe binoculaire, caméra, appareil photo, microscope à champ proche, endoscope, microscope confocal, microscope à champ proche optique (SNOM), lecteur de biopuces, lecteur magnéto-optique, microscope confocal.

Les supports AR-X-Pol et Ampli-Pol sont utilisables à la fois comme fond anti-réfléchissant et comme support porte objet pour tous les travaux de microscopie en lumière polarisée en réflexion, que l'observation se fasse à l'air libre, en immersion, ou à travers le support.

Ils permettent une visualisation optimale non seulement d'objets posés à la surface du support, mais aussi de l'interface entre le substrat 1 et la couche 2.

Ils permettent une visualisation et une mesure optimales de tous les effets de dichroïsme et de biréfringence à l'intérieur de la couche 2 elle-même.

Cela est particulièrement avantageux pour l'imagerie et la lecture parallèle de domaines magnétiques situés dans la couche lorsqu'elle possède une susceptibilité magnéto-optique à chacun des effets suivants: effet Faraday, effet Voigt, biréfringence magnétique linéaire.

Ils permettent une visualisation et une mesure optimales de tous les effets d'anisotropie de réflexion à l'interface entre le substrat 1 et la couche 2, ce qui est particulièrement avantageux pour la mise en oeuvre de la technique de microscopie de réflexion anisotrope (RAM).

Cela est aussi particulièrement avantageux si le substrat 1 présente une susceptibilité magnéto-optique (effet Kerr longitudinal ou transverse, effet Kerr polaire), les revêtements AR-Pol apportant une amélioration considérable en contraste et en sensibilité des procédés de lecture magnéto-optiques.

Les supports AR-Pol sont particulièrement efficaces pour les observations en contraste interférentiel différentiel en réflexion, quel que soit la variante de la technique utilisée, et quel que soit le type de polarisation utilisé (linéaire ou circulaire) et permettent la combinaison de toutes ces techniques de contraste interférentiel avec toutes les autres techniques de visualisation, de détection, ou de mesure mentionnées.

Les revêtements AR-Pol à une couche 2 existent pour tous les types de substrats 1. Ils permettent une détection plus sensible qu'avec toutes les autres techniques des modifications qui se produisent à l'extrémité d'une fibre optique, et notamment la détection d'une espèce capturée par une couche 2 sensible installée à l'extrémité d'une telle fibre.

Ce sont des supports porte-objet idéaux pour les techniques de microscopie à champ proche (AFM, STM, SNOM, et autres SPM) car ils permettent la détection, le repérage, et la visualisation de films ou objets invisibles par les techniques optiques conventionnelles.

Ce sont aussi des supports idéaux pour effectuer le suivi optique in situ ou le contrôle de la qualité a posteriori de dépôts de couches 2 ultra-minces effectués par toutes les techniques de dépôt disponibles, par exemple par les techniques de Langmuir-Blodgett, par les techniques de plasmas, de dépôt ionique, de spin-coating, de dip-coating, par MBE, etc...

Utilisés comme supports porte-objets, ils augmentent aussi l'efficacité des techniques des techniques magnéto-optiques, des techniques de microscopie confocale en lumière polarisée, des techniques SNOM (Scanning Near-field Optical Microscopy) en lumière polarisée, et de toutes les techniques de visualisation spectroscopiques (absorption infra-rouge, Raman, Fluorescence, Absorption ultra-violette, Microscopie à 2 photons.

Utilisés comme supports porte-objets, ils permettent d'accroître considérablement la qualité des mesures de réflectivité en lumière polarisée et d'ellipsomètrie sous microscope optique.

Les supports AR-Pol sont aussi avantageusement utilisés comme supports porte-objet dans tous les dispositifs de micro-manipulation sous microscope optique: pinces optiques, pinces magnétiques, pinces piézo-électriques.

**Revendications**

1. Dispositif d'observation d'un échantillon comprenant un microscope optique, un support destiné à recevoir ledit échantillon immergé dans un milieu (3) d'indice $n_0$, des moyens pour éclairer l'échantillon avec un éclairage incohérent convergent incident sous un angle $\theta_0$ à une longueur d'onde $\lambda$, et deux polariseurs croisés ; ledit support comportant un substrat (1) d'indice de réfraction complexe $n_2$ et une couche (2) d'indice de réfraction complexe $n_1$ et d'épaisseur $e_1$; **<u>caractérisé en ce que</u>** l'épaisseur $e_1$ de la couche (2) est choisie, par rapport aux paramètres $\theta_0$, $\lambda$, $n_0$, $n_2$ et $n_1$ et à 2% près, de manière à minimiser un coefficient choisi parmi $|\sigma^2|$ et $\dfrac{\left|\sigma^2\right|}{R_{NP}}$ , avec :

$$\sigma = r_p + r_s = \frac{\sigma_{01} + \sigma_{12}\left(1 + \pi_{01}\right)e^{(-2j\beta_1)} + \sigma_{01}\pi_{12}e^{(-4j\beta_1)}}{\left(1 + r_{01(p)}r_{12(p)}e^{(-2j\beta_1)}\right)\left(1 + r_{01(s)}r_{12(s)}e^{(-2j\beta_1)}\right)}$$

et

$$R_{NP} = \frac{1}{4}\left|r_p + r_s\right|^2 + \frac{1}{4}\left|r_p - r_s\right|^2$$

;

formules dans lesquelles

$$\cdot \; r_p = \frac{r_{01(p)} + r_{12(p)}e^{(-2j\beta_1)}}{1 + r_{01(p)}r_{12(p)}e^{(-2j\beta_1)}} \; \text{ et } \; r_s = \frac{r_{01(s)} + r_{12(s)}e^{(-2j\beta_1)}}{1 + r_{01(s)}r_{12(s)}e^{(-2j\beta_1)}}$$

- $\sigma_{ij} = r_{ij(p)} + r_{ij(s)}$ et $\pi_{ij} = r_{ij(p)} \cdot r_{ij(s)}$;

$$r_{ij(p)} = \frac{n_j \cos\theta_i - n_i \cos\theta_j}{n_j \cos\theta_i + n_i \cos\theta_j} \quad \text{et} \quad r_{ij(s)} = \frac{n_i \cos\theta_i - n_j \cos\theta_j}{n_i \cos\theta_i + n_j \cos\theta_j}$$

- $(i, j) = (0,1)$ ou $(1, 2)$

$$\beta_1 = \frac{2\pi n_1 e_1 \cos\theta_1}{\lambda}$$

$$\cos\theta_1 = \sqrt{1 - \left(\frac{n_0}{n_1}\right)^2 \sin^2\theta_0}$$

2. Dispositif selon la revendication 1 dans lequel :

- une composante du support choisie parmi le substrat (1) et la couche (2) est constituée d'un matériau anisotrope dont les axes principaux sont parallèles et perpendiculaires à la surface dudit support ; et
- l'orientation relative du polariseur et du support autour de la normale peut être modifiée afin d'optimiser les coefficients de réflexion $r_s$ et $r_p$.

3. Dispositif d'observation d'un échantillon comprenant un microscope optique, un support destiné à recevoir ledit échantillon immergé dans un milieu (3) d'indice $n_0$, des moyens pour éclairer l'échantillon avec un éclairage incohérent convergent incident sous un angle $\theta_0$ à une longueur d'onde $\lambda$, un polariseur et une lame quart d'onde; ledit support comportant un substrat (1) d'indice de réfraction complexe $n_2$ et une couche (2) d'indice de réfraction complexe $n_1$ et d'épaisseur $e_1$ ; **caractérisé en ce que** l'épaisseur $e_1$ de la couche (2) est choisie, par rapport aux paramètres $\theta_0$, $\lambda$, $n_0$, $n_2$ et $n_1$ et à 2% près, de manière à minimiser un coefficient choisi parmi $|\sigma^2|$ et $\dfrac{|\sigma^2|}{R_{NP}}$, avec :

$$\sigma = r_p + r_s = \frac{\sigma_{01} + \sigma_{12}(1 + \pi_{01})e^{(-2j\beta_1)} + \sigma_{01}\pi_{12}e^{(-4j\beta_1)}}{\left(1 + r_{01(p)}r_{12(p)}e^{(-2j\beta_1)}\right)\left(1 + r_{01(s)}r_{12(s)}e^{(-2j\beta_1)}\right)}$$

et

$$R_{NP} = \frac{1}{4}\left|r_p + r_s\right|^2 + \frac{1}{4}\left|r_p - r_s\right|^2$$

;

formules dans lesquelles

$$r_p = \frac{r_{01(p)} + r_{12(p)}e^{(-2j\beta_1)}}{1 + r_{01(p)}r_{12(p)}e^{(-2j\beta_1)}} \quad \text{et} \quad r_s = \frac{r_{01(s)} + r_{12(s)}e^{(-2j\beta_1)}}{1 + r_{01(s)}r_{12(s)}e^{(-2j\beta_1)}}$$

- $\sigma_{ij} = r_{ij(p)} + r_{ij(s)}$ et $\pi_{ij} = r_{ij(p)} \cdot r_{ij(s)}$ ;

$$r_{ij(p)} = \frac{n_j \cos\theta_i - n_i \cos\theta_j}{n_j \cos\theta_i + n_i \cos\theta_j} \quad \text{et}$$

$$r_{ij(s)} = \frac{n_i \cos\theta_i - n_j \cos\theta_j}{n_i \cos\theta_i + n_j \cos\theta_j}$$

- $(i, j) = (0, 1)$ ou $(1, 2)$

$$\cdot\ \beta_1 = \frac{2\pi n_1 e_1 \cos\theta_1}{\lambda}$$

$$\cos\theta_1 = \sqrt{1 - \left(\frac{n_0}{n_1}\right)^2 \sin^2\theta_0}$$

4. Dispositif selon l'une des revendications précédentes, dans lequel les valeurs de l'indice de réfraction $n_1$ et de l'épaisseur $e_1$ de la couche (2) du support sont à 2% près tels que $\sigma=0$.

5. Dispositif selon la revendication 4, **caractérisé en ce que** le substrat (1) et la couche (2) du support sont diélectriques ou faiblement absorbants, le module de la partie imaginaire de leur indice complexe étant inférieur à 0,01, les conditions générales de la revendication 4 se réduisant aux conditions :

$$n_1 e_1 \cos\theta_1 = \frac{\lambda}{4} + k\frac{\lambda}{2}$$

et

$$n_1^2 = \frac{n_2^2 + \sqrt{n_2^2 \cos^2\theta_0 (n_2^2 - n_0^2 \sin^2\theta_0)}}{n_2^2 + n_0^2 \cos^2\theta_0}$$

avec k entier et avec une incertitude de 2 % sur les valeurs de $n_1$ et $e_1$.

6. Dispositif selon la revendication 5, **caractérisé en ce que** $\theta_0$ est inférieur à 5°, les conditions générales de la revendication 4 se réduisant à

$$\frac{2}{n_1^2} = \frac{1}{n_0^2} + \frac{1}{n_2^2}$$

et

$$n_1 e_1 \cos\theta_1 = \frac{\lambda}{4} + k\frac{\lambda}{2}$$

avec k entier et avec une incertitude de 2 % sur les valeurs de $n_1$ et $e_1$.

7. Dispositif selon l'une quelconque des revendications précédentes, dans lequel les moyens pour éclairer l'échantillon sont adaptés pour produire un éclairage incident annulaire avec un angle d'incidence $\theta_0$ qui est unique à $\pm 2,5°$ près.

8. Dispositif selon l'une quelconque des revendications 1 à 6, dans lequel les moyens pour éclairer l'échantillon sont adaptés pour produire un éclairage incident et axial convergent avec un angle d'incidence moyen $\theta_0$ lié à son ouverture angulaire totale $\Delta\theta_0$ par la relation :

$$\cos\theta_0 = \cos^2\left(\frac{\Delta\theta_0}{2}\right)$$

9. Dispositif selon l'une quelconque des revendications précédentes, dans lequel les moyens pour éclairer l'échantillon sont adaptés pour produire un éclairage monochromatique ou quasi-monochromatique à la longueur d'onde $\lambda$.

10. Dispositif selon l'une quelconque des revendications précédentes, dans lequel les moyens pour éclairer l'échantillon sont adaptés pour produire un éclairage à spectre large continu ou polychromatique d'étendue maximale $\pm 0,3\ \lambda$ autour de sa longueur d'onde moyenne $\lambda$.

11. Dispositif selon l'une quelconque des revendications 1 à 4 et 7 à 10, dans lequel le milieu ambiant (3) est de l'air, avec $\theta_0=30°$ et $\lambda=589, 3$ nm, **caractérisé en ce que** le substrat (1) du support est en cadmium avec $n_2=1,13-5,01j$, la couche (2) ayant pour indice $n_1=1,42$ et $e_1=1084$ Angströms.

12. Dispositif selon l'une quelconque des revendications 1 à 4 et 7 à 10, **caractérisé en ce que** le substrat (1) du support et la couche (2) du support ont les spécificités du tableau suivant dans lequel $n_1$ et $e_1$ sont l'indice et l'épaisseur de la couche, $n_2$ l'indice de réfraction complexe du substrat (1), pour l'air comme milieu ambiant (3), $\theta_0=5°$ et $\lambda= 540$ nm :

| substrat | $n_2$ | $n_1$ | $e_1$(Å) |
|---|---|---|---|
| or | 0.40 - 2.6$j$ | 1.70 | 694 |
| argent | 0.13 - 3.44$j$ | 1.59 | 795 |
| aluminium | 0.92 - 0.96$j$ | 2.01 | 346 |
| nickel | 1.76 - 3.2$j$ | 1.51 | 847 |

13. Dispositif selon l'une quelconque des revendications 1 à 4 et 7 à 10, **caractérisé en ce que** $\theta_0$ est un angle d'incidence moyen valant 20° et **en ce que** le substrat (1) et la couche (2) du support ont les spécificités du tableau suivant dans lequel $n_1$ et $e_1$ sont l'indice et l'épaisseur de la couche (2), $n_2$ l'indice de réfraction complexe du substrat (1), pour l'air comme milieu ambiant (3) et $\lambda= 540$ nm.

| substrat | $n_2$ | $n_1$ | $e_1$(Å) |
|---|---|---|---|
| Or | 0.40 - 2.6$j$ | 1.64 | 739 |
| Argent | 0.13 - 3.44$j$ | 1.55 | 838 |
| aluminium | 0.92 - 0.95$j$ | 1.89 | 399 |
| Nickel | 1.76 - 3.2$j$ | 1.48 | 890 |

14. Dispositif selon l'une quelconque des revendications 1 à 4 et 7 à 10 **caractérisé en ce que** $\theta_0$ vaut 5° et **en ce que** le substrat (1) et la couche (2) du support ont les spécificités du tableau suivant dans lequel $n_1$ et $e_1$ sont l'indice et l'épaisseur de la couche (2) à 2% près, $n_2$ l'indice de réfraction complexe du substrat (1), $n_0$ l'indice du milieu ambiant (3), $\lambda=589,3$ nm quand le substrat (1) est en cadmium et $\lambda=540$ nm dans les autres cas.

| substrat | $n_2$ | $n_0$ | $n_1$ | $e_1$ |
|---|---|---|---|---|
| or | $0.40 - 2.6j$ | 1.33 | 2.42 | 490 |
| or | $0.40 - 2.6j$ | 1.5 | 1.79 | 755 |
| argent | $0.13 - 3.44j$ | 1.33 | 2.28 | 512 |
| argent | $0.13 - 3.44j$ | 1.5 | 2.7 | 412 |
| aluminium | $0.92 - 0.95j$ | 1 | 1.89 | 399 |
| nickel | $1.76 - 3.2j$ | 1.33 | 2.11 | 572 |
| nickel | $1.76 - 3.2j$ | 1.5 | 2.45 | 473 |
| cadmium | 1.13-5.01j | 1 | 1.49 | 970 |
| cadmium | 1.13-5.01j | 1.33 | 2.05 | 684 |
| cadmium | 1.13-5.01j | 1.5 | 2.36 | 582 |
| étain | 1.48-5.25j | 1 | 1.48 | 899 |
| étain | 1.48-5.25j | 1.33 | 2.02 | 640 |
| étain | 1.48-5.25j | 1.5 | 2.33 | 548 |
| cuivre | 1.04-2.59j | 1 | 1.62 | 746 |
| cuivre | 1.04-2.59j | 1.33 | 2.23 | 423 |
| cuivre | 1.04-2.59j | 1.5 | 2.83 | 351 |
| Fer (évaporé) | 1.51-1.63j | 1 | 1.54 | 737 |
| | 1.51-1.63j | 1.33 | 2.23 | 423 |
| | 1.51-1.63j | 1.5 | 2.72 | 305 |

**15.** Dispositif selon l'une quelconque des revendications 1 à 10, **caractérisé en ce que** les paramètres définis par les revendications 11 à 14 sont conservés à l'exception de la longueur d'onde λ et de l'épaisseur $e_1$ de la, couche 2 qui sont modifiés proportionnellement, $\dfrac{e_1}{\lambda}$ n'étant pas modifié.

**16.** Dispositif selon l'une quelconque des revendications précédentes, dans lequel ledit support constitue le fond d'une boîte de Pétri.

**17.** Dispositif selon l'une quelconque des revendications précédentes, dans lequel le microscope optique est muni d'un dispositif de contraste interférentiel différentiel.

**Claims**

**1.** Device for observing a sample comprising an optical microscope, a support designed to receive said sample immersed in a medium (3) with an index $n_0$, means for illuminating the sample with incident convergent incoherent illumination at an angle $\theta_0$ at a wavelength λ and two crossed polarisers; said support comprising a substrate (1) with a complex refractive index $n_2$ and a layer (2) with a complex refractive index $n_1$ and a thickness $e_1$; **characterised in that** the thickness $e_1$ of the layer (2) is selected with respect to the parameters $\theta_0$, λ , $n_0$, $n_2$ and $n_1$ and to within 2% with a view to minimising a coefficient selected from $|\sigma^2|$ and $\dfrac{|\sigma^2|}{R_{NP}}$, where:

$$\sigma = r_p + r_s = \frac{\sigma_{01} + \sigma_{12}(1+\pi_{01})e^{(-2j\beta_1)+\sigma_{01}\pi_{12}e^{(-4j\beta_1)}}}{\left(1+r_{01(p)}r_{12(p)}e^{(-2j\beta_1)}\right)\left(1+r_{01(s)}r_{12(s)}e^{(-2j\beta_1)}\right)}$$

and

$$R_{NP} = \frac{1}{4}|r_p + r_s|^2 + \frac{1}{4}|r_p - r_s|^2$$

formulas in which

- $r^p = \dfrac{r_{01(p)} + r_{12(p)}e^{(-2j\beta_1)}}{1 + r_{01(p)}r_{12(p)}e^{(-2j\beta_1)}}$   $r_s = \dfrac{r_{01(s)} + r_{12(s)}e^{(-2j\beta_1)}}{1 + r_{01(s)}r_{12(s)}e^{(-2j\beta_1)}}$

and

$\sigma_{ij}=r_{ij(p)}$ and $\pi_{ij}=r_{ij(p)} \cdot r_{ij(s)}$;

- $r_{ij(p)} = \dfrac{n_j cos\theta_i - n_i cos\theta_j}{n_j cos\theta_i + n_i cos\theta_j}$

and

$r_{ij(s)} = \dfrac{n_i cos\theta_i - n_j cos\theta_j}{n_i cos\theta_i + n_j cos\theta_j}$

- $(i, j) = (0, 1)$ or $(1, 2)$

- $\beta_1 = \dfrac{2\pi n_1 e_1 cos\theta_1}{\lambda}$

- $cos\theta_1 = \sqrt{1 - \left(\dfrac{n_0}{n_1}\right)^2 sin^2\theta_0}$

2. Device as claimed in claim 1, in which:

- a component of the support selected from the substrate (1) and the layer (2) is made from an anisotropic material, the main axes of which are parallel and perpendicular to the surface of said support; and
- the relative orientation of the polariser and support around the normal can be modified in order to optimise the coefficients of reflection $r_s$ and $r_p$.

3. Device for observing a sample comprising an optical microscope, a support designed to receive said sample immersed in a medium (3) with an index $n_0$, means for illuminating the sample with incident, convergent, incoherent illumination at an angle $\theta_0$ at a wavelength $\lambda$, a polariser and a quarter-wave plate; said support comprising a substrate (1) with a complex refractive index $n_2$ and a layer (2) with a complex refractive index $n_1$ and a thickness $e_1$; **characterised in that** the thickness $e_1$ of the layer (2) is selected on the basis of the parameters $\theta_0$, $\lambda$, $n_0$, $n_2$ and $n_1$ and to within 2% with a view to minimising a coefficient selected from $|\sigma^2|$ and $\dfrac{|\sigma^2|}{R_{NP}}$, where:

$$\sigma = r_p + r_s = \frac{\sigma_{01} + \sigma_{12}(1+\pi_{01})e^{(-2j\beta_1)+\sigma_{01}\pi_{12}e^{(-4j\beta_1)}}}{\left(1+r_{01(p)}r_{12(p)}e^{(-2j\beta_1)}\right)\left(1+r_{01(s)}r_{12(s)}e^{(-2j\beta_1)}\right)}$$

and

$$R_{NP} = \frac{1}{4}|r_p + r_s|^2 + \frac{1}{4}|r_p - r_s|^2$$

formulas in which

- $r^p = \dfrac{r_{01(p)} + r_{12(p)}e^{(-2j\beta_1)}}{1 + r_{01(p)}r_{12(p)}e^{(-2j\beta_1)}}$  $r_s = \dfrac{r_{01(s)} + r_{12(s)}e^{(-2j\beta_1)}}{1 + r_{01(s)}r_{12(s)}e^{(-2j\beta_1)}}$

and

o $\sigma_{ij} = r_{ij(p)}$ and $\pi_{ij} = r_{ij(p)} \cdot r_{ij(s)}$;

- $r_{ij(p)} = \dfrac{n_j cos\theta_i - n_i cos\theta_j}{n_j cos\theta_i + n_i cos\theta_j}$

and

$r_{ij(s)} = \dfrac{n_i cos\theta_i - n_j cos\theta_j}{n_i cos\theta_i + n_j cos\theta_j}$

- $(i, j) = (0, 1)$ or $(1, 2)$

- $\beta_1 = \dfrac{2\pi n_1 e_1 cos\theta_1}{\lambda}$

- $cos\theta_1 = \sqrt{1 - \left(\dfrac{n_0}{n_1}\right)^2 sin^2\theta_0}$

4. Device as claimed in one of the preceding claims, in which the values for the refractive index $n_1$ and thickness $e_1$ of the layer (2) of the support are such that $\sigma=0$ to within 2%.

5. Device as claimed in claim 4, **characterised in that** the substrate (1) and layer (2) of the support are dielectric or slightly absorbent, the modulus of the imaginary part of their complex index being less than 0.01, the general conditions of claim 4 being reduced to the conditions:

$$n_1 \theta_1 cos\theta_1 = \frac{\lambda}{4} + k\frac{\lambda}{2}$$

and

$$n_1^2 = \frac{n_2^2 cos^2\theta_0 (n_2^2 - n_0^2 sin^2\theta_0)}{n_2^2 + n_0^2 cos^2\theta_0}$$

where k is a whole number and with an uncertainty of 2% with respect to the values of $n_1$ and $e_1$.

6. Device as claimed in claim 5, **characterised in that** $\theta_0$ is less than 5°, the general conditions of claim 4 being reduced to

$$\frac{2}{n_1^2} = \frac{1}{n_0^2} + \frac{1}{n_2^2}$$

and

$$n_1 e_1 cos\theta_1 = \frac{\lambda}{4} + k\frac{\lambda}{2}$$

where k is a whole number and with an uncertainty of 2% with respect to the values of $n_1$ and $e_1$.

7. Device as claimed in any one of the preceding claims, in which the means for illuminating the sample are adapted to produce annular incident illumination with an angle of incidence $\theta_0$ which is unique to within $\pm 2.5°$.

8. Device as claimed in any one of claims 1 to 6, in which the means for illuminating the sample are adapted to produce incident and axially convergent illumination with an average angle of incidence $\theta_0$ linked to its total annular opening $\Delta\theta_0$ by the equation:

$$cos\theta_0 = cos^2\left(\frac{\Delta\theta_0}{2}\right)$$

**9.** Device as claimed in any one of the preceding claims in which the means for illuminating the sample are adapted to produce monochromatic or quasi-monochromatic illumination at the wavelength $\lambda$.

**10.** Device as claimed in any one of the preceding claims, in which the means for illuminating the sample are adapted to produce illumination with a continuous or polychromatic broad spectrum with a maximum range of $\pm 0.3 \lambda$ around its average wavelength $\lambda$.

**11.** Device as claimed in any one of claims 1 to 4 and 7 to 10, in which the ambient medium (3) is air, where $\theta_0 = 30°$ and $\lambda = 589, 3nm$, **characterised in that** the substrate (1) of the support is cadmium with $n_2$=1.13-5.01, the layer (2) having an index $n_1$=1.42 and $e_1$=1084 Angström.

**12.** Device as claimed in any one of claims 1 to 4 and 7 to 10, **characterised in that** the substrate (1) of the support and the layer (2) of the support have the specific features set out in the table below, in which $n_1$ and $e_1$ are the index and thickness of the layer, $n_2$ is the complex refractive index of the substrate (1), with air as the ambient medium (3), $\theta_0$=5° and $\lambda$=540 nm:

| Substrate | $n_2$ | $n_1$ | $e_1$(Å) |
|---|---|---|---|
| gold | 0.40-2.6$j$ | 1.70 | 694 |
| silver | 0.13-3.44$j$ | 1.59 | 795 |
| aluminium | 0.92-0.95$j$ | 2.01 | 346 |
| nickel | 1.76-3.2$j$ | 1.51 | 847 |

**13.** Device as claimed in any one of claims 1 to 4 and 7 to 10, **characterised in that** $\theta_0$ is an average angle of incidence equal to 20° and **in that** the substrate (1) and the layer (2) of the support are based on the specific features set out in the table below, in which $n_1$ and $e_1$ are the index and thickness of the layer (2), $n_2$ is the complex refractive index of the substrate (1), with air as the ambient medium (3) and $\lambda$=540 nm:

| Substrate | $n_2$ | $n_1$ | $e_1$(Å) |
|---|---|---|---|
| gold | 0.40-2.6$j$ | 1.64 | 739 |
| silver | 0.13-3.44$j$ | 1.55 | 838 |
| aluminium | 0.92-0.95$j$ | 1.89 | 399 |
| nickel | 1.76-3.2$j$ | 1.48 | 890 |

**14.** Device as claimed in any one of claims 1 to 4 and 7 to 10, **characterised in that** $\theta_0$ is equal to 5° and **in that** the substrate (1) and the layer (2) of the support are based on the specific features set out in the table below, in which $n_1$ and $e_1$ are the index and thickness of the layer (2) to within 2%, $n_2$ is the complex refractive index of the substrate (1), $n_0$ is the index of the ambient medium (3), $\lambda$=589.2 nm if the substrate (1) is cadmium and $\lambda$=540 in the other cases.

| Substrate | $n_2$ | $n_0$ | $n_1$ | $e_1$ |
|---|---|---|---|---|
| Gold | 0.40 - 2.6$j$ | 1.33 | 2.42 | 490 |
| Gold | 0.40 - 2.6$j$ | 1.5 | 1.79 | 755 |
| Silver | 0.13 - 3.44$j$ | 1.33 | 2.28 | 512 |
| Silver | 0.13 - 3.44$j$ | 1.5 | 2.7 | 412 |

(continued)

| Substrate | $n_2$ | $n_0$ | $n_1$ | $e_1$ |
|---|---|---|---|---|
| Aluminium | 0.92 - 0.95$j$ | 1 | 1.89 | 399 |
| Nickel | 1.76 - 3.2$j$ | 1.33 | 2.11 | 572 |
| Nickel | 1.76 - 3.2$j$ | 1.5 | 2.45 | 473 |
| Cadmium | 1.13-5.01j | 1 | 1.49 | 970 |
| Cadmium | 1.13 -5.01j | 1.33 | 2.05 | 684 |
| Cadmium | 1.13- 5.01j | 1.5 | 2.36 | 582 |
| Tin | 1.48-5.25j | 1 | 1.48 | 899 |
| Tin | 1.46-5.25j | 1.33 | 2.02 | 640 |
| Tin | 1.48-5.25j | 1.5 | 2.33 | 548 |
| Copper | 1.04-2.59j | 1 | 1.62 | 746 |
| Copper | 1.04-2.59j | 1.33 | 2.23 | 423 |
| Copper | 1.04-2.59j | 1.5 | 2.83 | 351 |
| (evaporated) iron | 1.51-1.63j | 1 | 1.54 | 737 |
| | 1.51-1.63j | 1.33 | 2.23 | 423 |
| | 1.51-1.63j | 1.5 | 2.72 | 305 |

**15.** Device as claimed in any one of claims 1 to 10, **characterised in that** the parameters defined by claims 11 to 14 are maintained with the exception of the wavelength $\lambda$ and the thickness $e_1$ of the layer 2 which are modified proportionally, $\frac{e_1}{\lambda}$ not being modified.

**16.** Device as claimed in any one of the preceding claims, in which said support constitutes the base of a Petri dish.

**17.** Device as claimed in any one of the preceding claims, in which the optical microscope is provided with a differential interferential contrast device.

**Patentansprüche**

**1.** Vorrichtung zur Beobachtung einer Probe, umfassend ein optisches Mikroskop, einen Träger, welcher dazu bestimmt ist, die Probe eingetaucht in einem Medium (3) mit Index $n_0$ aufzunehmen, Mittel zum Beleuchten der Probe mit einer konvergenten inkohärenten Beleuchtung, welche unter einem Winkel $\theta_0$ mit einer Wellenläge $\lambda$ auftrifft, und zwei gekreuzte Polarisatoren; wobei der Träger ein Substrat (1) mit komplexem Brechungsindex $n_2$ und eine Schicht (2) mit komplexem Brechungsindex $n_1$ und Dicke $e_1$ aufweist; **dadurch gekennzeichnet, dass** die Dicke $e_1$ der Schicht (2) bezüglich der Parameter $\theta_0$, $\lambda$, $n_0$, $n_2$ und $n_1$ auf 2% derart ausgewählt ist, dass ein Koeffizient minimiert wird, welcher ausgewählt ist aus $|\sigma^2|$ und $\dfrac{|\sigma^2|}{R_{NP}}$, mit :

$$\sigma = r_p + r_s = \frac{\sigma_{01} + \sigma_{12}\left(1 + \pi_{01}\right)e^{\left(-2j\beta_i\right)} + \sigma_{01}\pi_{12}e^{\left(-4j\beta_i\right)}}{\left(1 + r_{01(p)}r_{12(p)}e^{\left(-2j\beta_i\right)}\right)\left(1 + r_{01(s)}r_{12(s)}e^{\left(-2j\beta_i\right)}\right)}$$

und

$$R_{NP} = \frac{1}{4}\left|r_p + r_s\right|^2 + \frac{1}{4}\left|r_p - r_s\right|^2 \quad ;$$

wobei in diesen Formeln gilt

- $r_p = \dfrac{r_{01(p)} + r_{12(p)}e^{(-2j\beta_1)}}{1 + r_{01(p)}r_{12(p)}e^{(-2j\beta_1)}}$ und $r_s = \dfrac{r_{01(s)} + r_{12(s)}e^{(-2j\beta_1)}}{1 + r_{01(s)}r_{12(s)}e^{(-2j\beta_1)}}$

- $\sigma_{ij} = r_{ij(p)} + r_{ij(s)}$ und $\pi_{ij} = r_{ij(p)} \cdot r_{ij(s)}$ ;

- $r_{ij(p)} = \dfrac{n_j\cos\theta_i - n_i\cos\theta_j}{n_j\cos\theta_i + n_i\cos\theta_j}$ und $r_{ij(s)} = \dfrac{n_i\cos\theta_i - n_j\cos\theta_j}{n_i\cos\theta_i + n_j\cos\theta_j}$

- (i, j) = (0,1) oder (1, 2)

- $\beta_1 = \dfrac{2\pi n_1 e_1 \cos\theta_1}{\lambda}$

- $\cos\theta_1 = \sqrt{1 - \left(\dfrac{n_0}{n_1}\right)^2 \sin^2\theta_0}$ .

2. Vorrichtung nach Anspruch 1, bei welcher :

   - eine Komponente des Trägers, welche ausgewählt ist aus dem Substrat (1) und der Schicht (2), gebildet ist durch ein aniotropes Material, dessen Hauptachsen parallel und senkrecht zu der Oberfläche des Trägers sind; und

   die relative Orientierung des Polarisators und des Trägers um die Normale modifiziert werden kann, um die Reflexionskoeffizienten $r_s$ und $r_p$ zu optimieren.

3. Vorrichtung zur Beobachtung einer Probe, umfassend ein optisches Mikroskop, einen Träger, welcher dazu bestimmt ist, die Probe eingetaucht in einem Medium (3) mit Index $n_0$ aufzunehmen, Mittel zur Beleuchtung der Probe mit einer konvergenten inkohärenten Beleuchtung, welche unter einem Winkel $\theta_0$ mit einer Wellenlänge $\lambda$ auftrifft, einen Polarisator und ein Lambda-Viertel-Plättchen; wobei der Träger ein Substrat (1) mit komplexem Brechungsindex $n_2$ und eine Schicht (2) mit komplexem Brechungsindex $n_1$ und Dicke $e_1$ aufweist; **dadurch gekennzeichnet, dass** die Dicke $e_1$ der Schicht (2) bezüglich der Parameter $\theta_0$, $\lambda$, $n_0$, $n_2$ und $n_1$ auf 2% derart ausgewählt ist, dass ein Koeffizient minimiert wird, welcher ausgewählt ist aus $|\sigma^2|$ und $\dfrac{|\sigma^2|}{R_{NP}}$ mit:

$$\sigma = r_p + r_s = \frac{\sigma_{01} + \sigma_{12}\left(1 + \pi_{01}\right)e^{(-2j\beta_1)} + \sigma_{01}\pi_{12}e^{(-4j\beta_1)}}{\left(1 + r_{01(p)}r_{12(p)}e^{(-2j\beta_1)}\right)\left(1 + r_{01(s)}r_{12(s)}e^{(-2j\beta_1)}\right)}$$

   und

$$R_{NP} = \frac{1}{4}\left|r_p + r_s\right|^2 + \frac{1}{4}\left|r_p - r_s\right|^2 \quad ;$$

   wobei in diesen Formeln gilt

- $r_p = \dfrac{r_{01(p)} + r_{12(p)}e^{(-2j\beta_1)}}{1 + r_{01(p)}r_{12(p)}e^{(-2j\beta_1)}}$ und $r_s = \dfrac{r_{01(s)} + r_{12(s)}e^{(-2j\beta_1)}}{1 + r_{01(s)}r_{12(s)}e^{(-2j\beta_1)}}$

- $\sigma_{ij} = r_{ij(p)} + r_{ij(s)}$ und $\pi_{ij} = r_{ij(p)} \cdot r_{ij(s)}$ ;

$$r_{ij(p)} = \frac{n_j \cos\theta_i - n_i \cos\theta_j}{n_j \cos\theta_i + n_i \cos\theta_j} \quad \text{und} \quad r_{ij(s)} = \frac{n_i \cos\theta_i - n_j \cos\theta_j}{n_i \cos\theta_i + n_j \cos\theta_j}$$

- $(i, j) = (0,1)$ oder $(1, 2)$

$$\beta_1 = \frac{2\pi n_1 e_1 \cos\theta_1}{\lambda}$$

$$\cos\theta_1 = \sqrt{1 - \left(\frac{n_0}{n_1}\right)^2 \sin^2\theta_0}$$

.

**4.** Vorrichtung nach einem der vorhergehenden Ansprüche, wobei die Werte des Brechnungsindex $n_1$ und der Dicke $e_1$ der Schicht (2) des Trägers auf 2% derart sind, dass $\sigma=0$.

**5.** Vorrichtung nach Anspruch 4, **dadurch gekennzeichnet, dass** das Substrat (1) und die Schicht (2) des Trägers dielektrisch oder gering absorbierend sind, wobei der Betrag des Imaginärteils ihres komplexen Index kleiner als 0,01 ist, wobei die allgemeinen Bedingungen des Anspruchs 4 sich reduzieren auf die Bedingungen:

$$n_1 e_1 \cos\theta_1 = \frac{\lambda}{4} + k\frac{\lambda}{2}$$

und

$$n_1^2 = \frac{n_2^2 + \sqrt{n_2^2 \cos^2\theta_0 (n_2^2 - n_0^2 \sin^2\theta_0)}}{n_2^2 + n_0^2 \cos^2\theta_0}$$

mit k ganzzahlig und einer Unsicherheit von 2% auf den Werten von $n_1$ und $e_1$.

**6.** Vorrichtung nach Anspruch 5, **dadurch gekennzeichnet, dass** $\theta_0$ kleiner als 5° ist, wobei die allgemeinen Bedingungen des Anspruchs 4 sich reduzieren auf

$$\frac{2}{n_1^2} = \frac{1}{n_0^2} + \frac{1}{n_2^2}$$

und

$$n_1 e_1 \cos\theta_1 = \frac{\lambda}{4} + k\frac{\lambda}{2}$$

mit k ganzzahlig und mit einer Unsicherheit von 2% auf den Werten von $n_1$ und $e_1$.

**7.** Vorrichtung nach einem der vorhergehenden Ansprüche, wobei die Mittel zur Beleuchtung der Probe dazu ausgestaltet sind, eine ringförmig auftreffende Beleuchtung mit einem Auftreffwinkel $\theta_0$ zu erzeugen, welcher bis auf $\pm 2,5°$ einheitlich ist.

**8.** Vorrichtung nach einem der Ansprüche 1-6, wobei die Mittel zur Beleuchtung der Probe dazu ausgestaltet sind, eine auftreffende und axial konvergente Beleuchtung mit einem mittleren Auftreffwinkel $\theta_0$ zu erzeugen, welcher mit seiner gesamten Winkelöffnung $\Delta\theta_0$ verknüpft ist durch die Beziehung:

$$\cos\theta_0 = \cos^2\left(\frac{\Delta\theta_0}{2}\right)$$ .

9. Vorrichtung nach einem der vorhergehenden Ansprüche, wobei die Mittel zur Beleuchtung der Probe dazu ausgestaltet sind, eine monochromatische oder quasi-monochromatische Beleuchtung mit der Wellenlängen $\lambda$ zu erzeugen.

10. Vorrichtung nach einem der vorhergehenden Ansprüche, wobei die Mittel zur Beleuchtung der Probe dazu ausgestaltet sind, eine Beleuchtung mit einem kontinuierlichen breiten oder polychromatischen Spektrum mit einer maximalen Ausdehnung von $\pm 0,3$ um seine mittlere Wellenlängen $\lambda$ zu erzeugen.

11. Vorrichtung nach einem der Ansprüche 1-4 und 7-10, wobei das umgebende Medium (3) Luft ist, mit $\theta_0 = 30°$ und $\lambda = 589,3$ nm, **dadurch gekennzeichnet, dass** das Substrat (1) des Trägers aus Kadmium mit $n_2 = 1,13 - 5,01j$ ist, wobei die Schicht (2) für den Index $n_1 = 1,42$ und $e_1 = 1084$ Angström aufweist.

12. Vorrichtung nach einem der Ansprüche 1 bis 4 und 7 bis 10, **dadurch gekennzeichnet, dass** das Substrat (1) des Trägers und die Schicht (2) des Trägers die Eigenschaften der folgenden Tabelle aufweisen, in welcher $n_1$ und $e_1$ der Index und die Dicke der Schicht, $n_2$ der komplexe Brechungsindex des Substrats (1) sind, für Luft als umgebendes Medium (3), $\theta_0 = 5°$ und $\lambda = 540$ nm :

| Substrat | $n_2$ | $n_1$ | $E_1(\text{Å})$ |
|---|---|---|---|
| Gold | 0,40-2,6j | 1,70 | 694 |
| Silber | 0,13-3,44j | 1,59 | 795 |
| Aluminium | 0,92-0,95j | 2,01 | 346 |
| Nickel | 1,76-3,2j | 1,51 | 847 |

13. Vorrichtung nach einem der Ansprüche 1 bis 4 und 7 bis 10, **dadurch gekennzeichnet, dass** $\theta_0$ ein mittlerer Auftreffwinkel von $20°$ ist und dass das Substrat (1) und die Schicht (2) des Trägers die Eigenschaften der folgenden Tabelle aufweisen, in welcher $n_1$ und $e_1$ der Index und die Dicke der Schicht (2), $n_2$ der komplexe Brechungsindex des Substrats (1) sind, für Luft als umgebendes Medium (3) und $\lambda = 540$ nm.

| Substrat | $n_2$ | $n_1$ | $E_1(\text{Å})$ |
|---|---|---|---|
| Gold | 0,40-2,6j | 1,64 | 739 |
| Silber | 0,13-3,44j | 1,55 | 838 |
| Aluminium | 0,92-0,95j | 1,89 | 399 |
| Nickel | 1,76-3,2j | 1,48 | 890 |

14. Vorrichtung nach einem der Ansprüche 1 bis 4 und 7 bis 10, **dadurch gekennzeichnet, dass** $\theta_0$ einen Wert von $5°$ aufweist und dass das Substrat (1) und die Schicht (2) des Trägers die Eigenschaften der nachfolgenden Tabelle aufweisen, in welcher $n_1$ und $e_1$ auf 2% der Index und die Dicke der Schicht (3), $n_2$ der komplexe Brechungsindex des Substrats (1), $n_0$ der Index des umgebenden Mediums (3), $\lambda = 589,3$ nm sind, wenn das Substrat (1) aus Kadmium ist, und in den anderen Fällen $\lambda = 540$ nm ist.

| Substrat | $n_2$ | $n_0$ | $n_1$ | $e_1$ |
|---|---|---|---|---|
| Gold | 0,40-2,6j | 1,33 | 2,42 | 490 |
| Gold | 0,40-2,6j | 1.5 | 1,79 | 755 |

(fortgesetzt)

| Substrat | $n_2$ | $n_0$ | $n_1$ | $e_1$ |
|---|---|---|---|---|
| Silber | 0,13-3,44j | 1,33 | 2,28 | 512 |
| Silber | 0,13-3,44j | 1,5 | 2,7 | 412 |
| Aluminium | 0,92-0,95j | 1 | 1,89 | 399 |
| Nickel | 1,76-3,2j | 1,33 | 2,11 | 572 |
| Nickel | 1,76-3,2j | 1,5 | 2,45 | 473 |
| Cadmium | 1,13-5,01j | 1 | 1,49 | 970 |
| Cadmium | 1,13-5,01j | 1,33 | 2,05 | 684 |
| Cadmium | 1,13-5,01j | 1,5 | 2,36 | 582 |
| Zinn | 1,48-5,25j | 1 | 1,48 | 899 |
| Zinn | 1,48-5,25j | 1,33 | 2,02 | 640 |
| Zinn | 1,48-5,25j | 1,5 | 2,33 | 548 |
| Kupfer | 1,04-2,59j | 1 | 1,62 | 746 |
| Kupfer | 1,04-2,59j | 1,33 | 2,23 | 423 |
| Kupfer | 1,04-2,59j | 1,5 | 2,83 | 351 |
| Eisen (verdampft) | 1,51-1,63j | 1 | 1,54 | 737 |
|  | 1,51-1,63j | 1,33 | 2,23 | 423 |
|  | 1,51-1,63j | 1,5 | 2,72 | 305 |

15. Vorrichtung nach einem der Ansprüche 1 bis 10, **dadurch gekennzeichnet, dass** die durch die Ansprüche 11 bis 14 definierten Parameter bis auf die Wellenlänge und die Dicke $e_1$ der Schicht (2) beibehalten sind, welche proportional modifiziert sind, wobei $\frac{e_1}{\lambda}$ nicht modifiziert ist.

16. Vorrichtung nach einem der vorhergehenden Ansprüche, wobei der Träger den Boden einer Petrischale bildet.

17. Vorrichtung nach einem der vorhergehenden Ansprüche, wobei das optische Mikroskop mit einer Differentialinterferenzkontrastvorrichtung versehen ist.

# FIGURE 1

# FIGURE 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5333052 A

**Littérature non-brevet citée dans la description**

- Hand Book of Optics. Mc Graw Hill Professional Publishing, 2000
- Handbook of Optical constants of solids. Academic Press, 1997, vol. 1-5
- Handbook of optics. McGraw-Hill Professional Publishing, 2000
- Principles of Optics : Electromagnetic Theory of Propagation, Interference and diffraction of Light. Cambridge University Press, 1999
- **E.D. Palik.** handbook of optical constants of solids. Academic Press, 1985, vol. 1-5